(19) Europäisches Patentamt
European Patent Office
Office européen des brevets

(11) **EP 4 300 370 A1**

(12) **EUROPEAN PATENT APPLICATION**

(43) Date of publication:
**03.01.2024 Bulletin 2024/01**

(21) Application number: **22181404.9**

(22) Date of filing: **27.06.2022**

(51) International Patent Classification (IPC):
**G06N 3/08** $^{(2023.01)}$      **G06N 3/04** $^{(2023.01)}$
**G06N 10/60** $^{(2022.01)}$

(52) Cooperative Patent Classification (CPC):
**G06N 3/084; G06N 3/04; G06N 10/60**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Qu&CO R&D B.V.**
**1071 LE Amsterdam (NL)**

(72) Inventors:
• **Philip, Evan**
 **1071 LE Amsterdam (NL)**
• **Kumar, Niraj**
 **1071 LE Amsterdam (NL)**
• **Elfving, Vincent Emanuel**
 **1071 LE Amsterdam (NL)**

(74) Representative: **De Vries & Metman**
 **Overschiestraat 180**
 **1062 XK Amsterdam (NL)**

(54) **COMPUTING INTEGRAL TRANSFORMS BASED ON PHYSICS INFORMED NEURAL NETWORKS**

(57) A computer-implemented method for computing an integral transform is described wherein the method comprises: receiving information about the target function associated an object or a process. e,g. a physical object or process, the target function being associated with at least one input variable of domain X, the information including data associated the object or process and/or the information including a differential equation comprising one or more derivatives of the target function and associated boundary conditions, the differential equation defining a model of the object or process; using a functional relation between a surrogate function G, a kernel function $k$ and the target function to transform the data and/or the differential equation into transformed data and/or a transformed differential equation of the surrogate function G respectively, the functional relation defining that the derivative of the surrogate function G with respect to the at least one input variable equals a product of the kernel function $k$ and the target function; training a trainable model function based on the transformed data and/or the transformed differential equation and a loss function so that the trained neural network represents the surrogate function; and, computing the integral transform of the target function, the computing including providing an integral limit and a second integral limit of the input variable to the input of the neural network to obtain at the output of the neural network a first function value and a second function value of the surrogate function respectively and, determining the integral transform based on the first function value and the second function value.

Fig. 1

EP 4 300 370 A1

**Description**

Technical field

The disclosure relates to computing integral transforms based on physics informed neural networks, in particular, though not exclusively, to methods and systems for computing integral transforms based on physics informed neural networks and a computer program product using such methods.

Background

Recently, the machine learning paradigm of physics-informed neural networks (PINNs) emerged as a method to solve, and to study systems governed by, differential equations. PINNs rely on automatic differentiation in two aspects: differentiating with respect to model parameters to optimize and train the model, and differentiating with respect to input variables in order to represent derivatives of functions for solving differential equations.

For example, Raissi et al, describe in their article Physics Informed Deep Learning (Part I): data driven solutions of non-linear partial differential equations, https://arxiv.org/abs/1711.10561, November 30, 2017 PINN-based machine learning methods for solving a differential equation by training one or more classical deep neural networks and use automatic differentiation to approximate the solution of the differential equation. PINNs can also be implemented on quantum computers. WO2022/101483 describes methods for solving a differential equation using variational differential quantum circuits (DQC) by embedding the function to learn in a variational circuit and providing information about the differential equation in the training part of the circuit.

In many computational problems in engineering and science however, not only differentiation but also integration is needed. Typically, computing integrals is more difficult than computing derivatives as determining a derivative is a local operation around a point in the variable space, while determining an integral is a global operation over a particular part of the variable space.

One computational problem relates to the problem of determining characteristics of a function represented by a differential equation. When addressing such problem, computation of a certain integral over the function is required. For example, stochastic differential equations (SDEs) can be written in terms of a partial differential equation (PDE) of a probability density function of the stochastic variable. To determine characteristics of the stochastic variable (such as the mean or the variance) based on the density function would require the computation of specific integral transforms of the density function, also referred to as the moments of the density function.

Typically, a symbolic functional expression of the function is not available so that a two-step approach is needed in which first the function is determined numerically by solving the differential equation using for example a PINN scheme as referred above and then computing an integral over this function using known integration methods such as a finite-difference based integration schemes or Monte Carlo integration schemes. These methods may be accurate for low-dimensional problems, however these methods are not suitable for high dimensional problems, a phenomena known as the curse of dimensionality.

Another important class of computational problems that requires computation of an integral as a computational subroutine, relates to the problem of solving integral equations and integro-differential equations, the latter equation including both integrals and derivates of a function. For these equations, the integral is part of the equation that needs to be solved so that the above referred to two-step approach cannot be used.

Hence, from the above, it follows that there is therefore a need in the art for improved methods and systems for efficiently computing integral transforms.

Summary

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is an aim of embodiments in this disclosure to provide a system and method for computing an integral transform that avoids, or at least reduce the drawbacks of the prior art. Embodiments are disclosed that enable efficient computing of an integral transform based on a physics informed neural networks, including classical deep neural network and quantum neural networks.

The embodiments augment PINN with automatic integration, in order to compute complex integral transforms of the solutions represented with trainable parameterized functions (sometimes referred to universal function approximators) such as neural networks, and to solve integro-differential equations where integrals are computed on-the-fly during training.

In an aspect, this disclosure relates to a method of computing an integral transform, comprising the steps of a receiving information about the target function associated an object or a process. e,g. a physical object or process, the target function being associated with at least one input variable of domain $X$, the information including data associated the object or process; using a functional relation between a surrogate function $G$, a kernel function $k$ and the target function to transform the data into transformed data, the functional relation defining that the derivative of the surrogate function $G$ with respect to the at least one input variable equals a product of the kernel function $k$ and the target function; training a neural network based on the transformed data a loss function so that the trained neural network represents the surrogate function; and, computing the integral transform of the target function, the computing including providing an integral limit and a second integral limit of the input variable to the input of the neural network to obtain at the output of the neural network a first function value and a second function value of the surrogate function respectively and, determining the integral transform based on the first function value and the second function value. Hence, in this embodiment, data may be used to train a neural network to represent the surrogate function $G$, so that the derivative of the surrogate function $G$ with respect to the at least one input variable equals a product of the kernel function $k$ and the target function. This way, an integral transform can be computed very efficiently based on the learned surrogate function.

In another aspect, the disclosure relates to a method of computing an integral transform, comprising the steps of receiving information about the target function associated an object or a process. e,g. a physical object or process, the target function being associated with at least one input variable of domain $X$, the information including data associated the object or process and the information including a differential equation comprising one or more derivatives of the target function and associated boundary conditions, the differential equation defining a model of the object or process; using a functional relation between a surrogate function $G$, a kernel function $k$ and the target function to transform the data and the differential equation into transformed data and a transformed differential equation of the surrogate function $G$ respectively, the functional relation defining that the derivative of the surrogate function $G$ with respect to the at least one input variable equals a product of the kernel function $k$ and the target function; training a neural network based on the transformed data and/or the transformed differential equation and a loss function so that the trained neural network represents the surrogate function; and, computing the integral transform of the target function, the computing including providing an integral limit and a second integral limit of the input variable to the input of the neural network to obtain at the output of the neural network a first function value and a second function value of the surrogate function respectively and, determining the integral transform based on the first function value and the second function value. In this embodiment, both data and a differential equation of the target function may be used to train a neural network to represent the surrogate function G, so that the derivative of the surrogate function G with respect to the at least one input variable equals a product of the kernel function $k$ and the target function. This way, an integral transform can be computed very efficiently based on the learned surrogate function, which is trained based on the physics underlying the behaviour of the object or process.

In yet a further aspect, the disclosure relates to a method of computing an integral transform according to the above-described steps wherein the neural network is only trained based on the differential equation and the boundary conditions (and not data).

Hence, the embodiments provide schemes for efficient computation of an integral transform of an unknown trail function by a trained neural network. The computation of the integral transform can be determined without learning the function itself. This way certain characteristics, e.g. physical or statical quantities of a complex process, deterministic or stochastic, can be determined without the need to compute the function itself. The differential equation may be any type of differential equation including non-linear differential equations, partial differential equations and/or integro-differential equations.

In this disclosure the term "neural network" refers to any classical-computer-evaluated (partially-)universal function approximator which can be automatically-differentiable with respect to input, including but not limited to, neural networks, power series, kernel functions, reservoir computers, normalizing flow etcetera. Similarly, the term "quantum neural network" refers to any differentiable quantum model, including quantum kernel functions and quantum neural networks. Quantum models typically are based on variational quantum circuits where a feature map encodes the input x via a unitary operation on a quantum circuit, and a variational unitary circuit is used to tune the model shape. In the case of quantum neural networks, a cost function measurement is performed at the output of the quantum circuit, and the expectation value of this cost function is interpreted as the function output value. This can be expanded to multi-functions using multiple cost functions. (see DQC). In case of quantum kernel functions, the variational state is measured in an overlap measurement with another variational state prepared at a different input point x. This overlap constitutes a single quantum kernel measurement, and a sum over multiple reference points on the input domain can constitute a kernel function, for such functions the article "Quantum Kernel Methods for Solving Differential Equations", Annie E. Paine, Vincent E. Elfving, and Oleksandr Kyriienko, arXiv preprint, 2203.08884 (2022). https://arxiv.org/abs/2203.08884

In an embodiment, the integral transform may be computed after training the neural network based on an optimization scheme.

In an embodiment, the kernel may be selected so that the integral transform represents a physical quantity or a statistical quantity associated with the target function.

In an embodiment, the differential equation may be a partial differential equation (PDE) associated with a stochastic process and a stochastic input variable.

In an embodiment, the trail function may be a probability density function associated with the stochastic input variable.

In an embodiment, the kernel function may be defined as the $m$-th power of $x$ ($m$ = 0,1,2,...) such that the integral transform represents the $m$-th order moment $I_m$.

In an embodiment, the differential equation may be an integro-differential equation comprising one or more integrals of the target function and one or more derivates of the target function.

In an embodiment, the computing of the integral transform may be performed during the training.

In an embodiment, the method may further comprise: determining a solution of the integro-differential equation based on the trained neural network and based on the relation between the derivative of the surrogate function and the product of the kernel and the target function.

In an embodiment, the neural network is a deep neural network.

In an embodiment, the training of the deep neural network may include determining one or more derivatives of the surrogate function with respect to the input and/or with respect to the network parameters

In an embodiment, the neural network may be a quantum neural network.

In an embodiment, the training of the quantum neural network may include determining one or more derivatives of the surrogate function with respect to the input and/or with respect to the network parameters

In an embodiment, differentiation of the neural network or the quantum neural network may be performed by finite differencing, automatic differentiation by backpropagation, forward-mode differentiation or Taylor mode differentiation

In an embodiment, differentiation of the quantum neural network may be performed by quantum circuit differentiation.

In an embodiment, the quantum neural network may comprise a differentiable quantum feature map and a variational quantum circuit.

In embodiment, the quantum neural network may comprise a differentiable quantum kernel function.

In an embodiment, the quantum neural network may be implemented based on gate-based quantum devices, digital/analog quantum devices, neutral-atom-based quantum devices, ion-based quantum devices, optical quantum devices and/or gaussian boson sampling devices.

In an embodiment, the training may include: executing one or more quantum circuits, into a sequence of signals and using the sequence of signals to execute gate operations on the quantum devices forming the quantum neural network; and/or, wherein the training includes: applying a read-out signal to quantum devices forming the quantum neural network and in response to the read-out signal measuring the output of the quantum neural network.

In a further aspect, the invention may relate to a system for computing an integral transform, using a computer system wherein the computer system is configured to perform the steps of: receiving information about the target function associated an object or a process. e,g. a physical object or process, the target function being associated with at least one input variable of domain $X$, the information including data associated the object or process and/or the information including a differential equation comprising one or more derivatives of the target function and associated boundary conditions, the differential equation defining a model of the object or process; using a functional relation between a surrogate function $G$, a kernel function $k$ and the target function to transform the data and/or the differential equation into transformed data and/or a transformed differential equation of the surrogate function $G$ respectively, the functional relation defining that the derivative of the surrogate function $G$ with respect to the at least one input variable equals a product of the kernel function $k$ and the target function; training a trainable model function based on the transformed data and/or the transformed differential equation and a loss function so that the trained neural network represents the surrogate function; and, computing the integral transform of the target function, the computing including providing an integral limit and a second integral limit of the input variable to the input of the neural network to obtain at the output of the neural network a first function value and a second function value of the surrogate function respectively and, determining the integral transform based on the first function value and the second function value.

In an embodiment, the computer system may be configured to perform any of the method steps as described above

In a further aspect, the computer program or suite of computer programs may comprise at least one software code portion or a computer program product storing at least one software code portion, the software code portion, when run on computer system being configured for executing the method steps as described above.

The embodiments in this application further schemes for efficiently computing a moment based on a density function, wherein the density function is associated with a deterministic or stochastic process. The schemes may use automatically-differentiable physics-informed neural networks for computing such density function. In an embodiment, one or more automatically-differentiable physics-informed neural networks executed by a computing unit may be used for computing the moment. In an embodiment, the computing unit may be configured as a classical special purpose computer comprising one or more GPUs and/or TPUs. In another embodiment, one or more automatically-differentiable quantum neural networks may be used for computing the moment, wherein the computing unit comprises a quantum computer. In an embodiment, the quantum neural network may be represented by one or more automatically-differentiable quantum variational circuits comprising quantum gate operations to be executed on the quantum computer.

The computing of the moment may include providing information about a density function DF or probability density function PDF to a computing unit. Here, the information may include information about the physics underlying the deterministic or stochastic process for which the moment is computed. In an embodiment, this information may be provided as data samples, e.g. generated by a sensing device and/or a data collection device. In another embodiment, this information may be provided as a differential equation or a set of differential equations. In yet another embodiment, the information may include both data samples and one or more differential equations. In an embodiment, the information may include initial and boundary conditions for the one or more differential equations.

The computing of the moment may further include transforming the density function into a transformed density function that includes the derivative of the (original) density function for which a (quantum or classical) machine learning model is trained. Further, in case the physics underlying the deterministic or stochastic process is provided in the form of a differential equation of the DF or PDF, the original differential equation may be transformed into a transformed differential equation that is based on the derivative of the transformed function. Subsequently, the neural network or the quantum neural network may be trained to learn the transformed function based on the data samples and/or the transformed differential equation. Then, based on the trained (quantum) neural network the moment is computed using two evaluations of the trained model. The method may be used for high-dimensional cases as well. Thus, the embodiments allow efficient computation of moments associated with deterministic or stochastic processes of high complexity and/or high dimensionality.

In an embodiment, the methods and systems described in this application may be used for computing moments for a SDE evolution of a single stochastic variable or a plurality (high-dimensional) stochastic variable(s). SDE evolution is ubiquitous across areas in physic processes such as fluid dynamics, biological evolution, market prediction in finance, etc. To determine the evolution of the SDE, the SDE may be transformed into a time-dependent Fokker-Planck differential equation involving the probability density function. Further, a transformed function comprising the derivative of the probability density function may be determined, which is to be learnt by the machine learning model and a transformed Fokker-Planck equation comprising the derivative of probability density function may be determined based on the original Fokker-Planck equation. This allows efficient computation of moments, for any order, for a SDE evolution with just two model evaluations after the model has been trained.

In an embodiment, the methods and systems described in this application may be used to address the problem of Option pricing in finance. Option pricing involves an option which provides the holder with the right to buy or sell a specified quantity of an underlying asset at a fixed price (also called the strike price or exercise price) at or before the expiration date of the option. The goal of option pricing is thus to compute an expected payoff of the option and compute the variance of the expected payoff, relating to first order and second order moments respectively. Scenarios may be considered where an option is dependent on a single underlying asset which is governed by a SDE or where an option is dependent on multiple $N$ different underlying assets which evolution is governed by a general $N$ dimensional SDE. To that end, the underlying SDE(s) are transformed into the Fokker-Planck equation involving the PDF and he first and second order moments are efficiently computed only using two trained model evaluations for each moment.

In an embodiment, the methods and system described in the embodiments above may be used in financial application.

The methods may be used to compute path dependent line integral.

The integral transforms can be computed effectively at any point during training, and gradients of the integral values with respect to model parameters are still accessible via backpropagation or quantum circuit differentiation. This allows solving integro-differential equations in a straightforward way.

The invention will be further illustrated with reference to the attached drawings, which schematically will show embodiments according to the invention. It will be understood that the invention is not in any way restricted to these specific embodiments.

Brief description of the drawings

**Fig 1.** depicts a system for computing an integral transform according to an embodiment of the invention;
**Fig 2.** depicts a method for computing an integral transform according to an embodiment of the invention;

**Fig. 3** depicts a method for computing an integral transform according to an embodiment of the invention;

**Fig. 4** depicts an example of a method for computing an integral transform according to an embodiment of the invention;

**Fig. 5** depicts computational results of a method for computing a moment of inertia;

**Fig 6.** shows computational results of a method for computing an electric potential;

**Fig. 7** shows computational results of solving an integro-differential equation;

**Fig. 8** shows computational results of a method for computing statistical quantities;

**Fig. 9** depicts a computer system for executing methods for computing an integral transform according to an embodiment of the invention.

**Fig. 10** depicts a computer system for executing methods for computing an integral transform according to another embodiment of the invention.

**Fig. 11** depicts a quantum neural network that can be used for computing an integral transform according to the embodiments

**Fig. 12** schematically depict differentialbe quantum feature maps;

**Fig. 13** schematically depict a variational quantum circuit;

**Fig. 14** depict circuit diagrams for evaluating a quantum kernel, respectively a derivative thereof, according to various embodiments

**Fig. 15** schematically depict hardware-level schematics illustrating the application of logical operations to qubits using a quantum circuit;

**Fig. 16** schematically depict hardware-level schematics illustrating the application of logical operations to qubits using a quantum circuit;

**Fig. 17** schematically depict hardware-level schematics illustrating the application of logical operations to qubits using a quantum circuit;

## Description of the embodiments

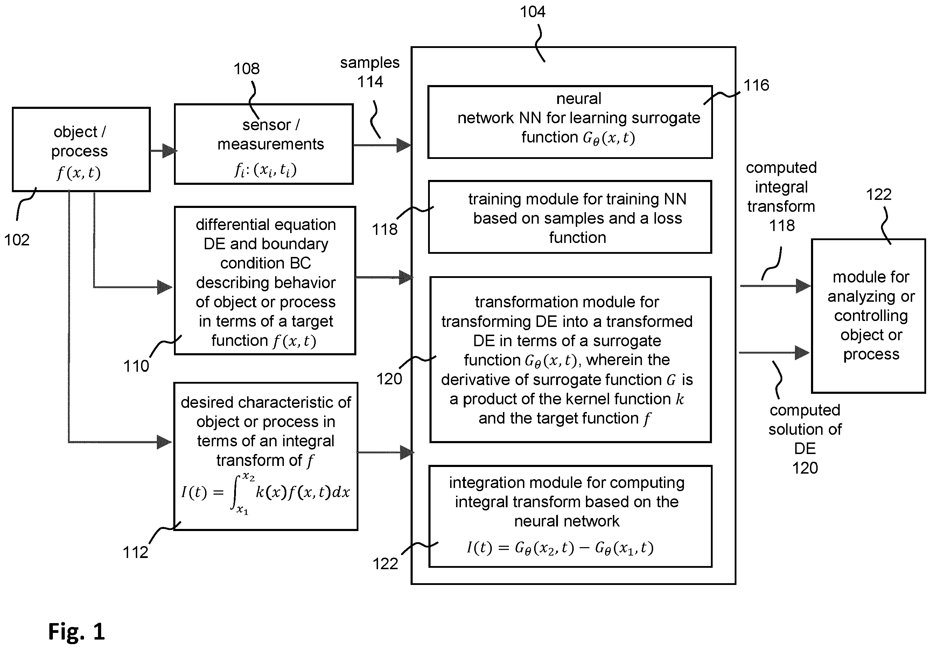

**Fig.** 1 depicts a system for computing an integral transform based on a physics information neural network according to an embodiment of the invention. In particular, figure depicts a system which is configured to compute of an unknown trail function that is defined in terms of a differential equation that models a certain process, e.g. a physical process. As shown in the figure, an object and/or a process **102** may be associated with a certain behaviour or characteristics which can be represented as an unknown function, which may be referred to as the target function $f(x,t)$ that has one or more function or input variables. Typically, the target function may be very complex involving a large number of variables. Information about the object or process may include data and a model.

Data samples **114**, i.e. values of the target function for certain values of the input variables, may be obtained by performing measurements as a function of one or more variables, including time. For example, one or more sensors may be used to obtain measurements of a certain physical process, e.g. a chemical process, as a function of different parameters, e.g. temperature, flow and time. Alternatively and/or in addition, the data samples may include values of one or more derivatives of the target function. For example, a sensor may measure the acceleration at different time instances wherein the target function is a velocity function.

Further, the behaviour of the object or process may be mathematically described ("modelled") by a differential equation **110** of the trail function. Although the functions in **Fig.** 1 are based on function variables $x,t$, the embodiments are not limited thereto. Multiple function variables, including vectors, may be used without departing from the teaching of the embodiments. Typically, the differential equation may be any type of differential equation, e.g. a (partial) differential equation, including non-linear terms, stochastic terms and/or integral terms. In the latter case the differential equation is referred to as an integro-differential equation.

Based on this information one typically would like to determine certain characteristics of the (behaviour of the) object and/or process, for example physical quantities associated with a physical process or statical quantifies associated with a statistical process. Typically, for determining such characteristics of a function the so-called integral transform **112** of the function of the function $f$ needs to be compute: $I(t) = \int_{x_1}^{x_2} k(x) f(x,t) dx$ wherein $k$ is the kernel function. In some embodiment, the kernel function may be a unity function. In that case the integral transform is the integral of the target function. In other embodiments, the kernel function is a specific function. The integral transform has many applications in engineering, physics and statistics. For example, in physics and statics the integral transform is used to compute an $n$-th order moment as: $I_n = \int x^m f(x,t) dx$, wherein the kernel is defined as the m-th power of $x$ wherein $m = 0,1,2,..$ These moments allows computation of statistical characteristics such as mean, variance, skewness and kurtosis of a stochastic variable $x$ having a probability density function $f$. Further, in physics moments are used to compute, for example, the moment of inertia of an object that has a density distribution $f$, torque as the first moment of a force, electric quadruple moment as the second moment of electric charge, etc.

Depending on the application integral transforms with different kernel functions may be used. Examples of known kernel functions are Fisher kernel, graph kernel, radial basis function kernel, string kernel, neural tangent kernel, covariance function. Examples of integral transforms include the Abel transform, associated Legendre transform, Fourier transform, Laplace transform, Hankel transform, Hartley transform, Hermite transform, Hilbert transform, Jacobi transform, Laguerre transform, Legendre transform, Mellin transform, Poisson transform, Radon transform, Weierstrass transform, and X-ray transform.

The problem related to computing an integral transform using a computer is that typically the target function $f$ is not known analytically. A known PINN scheme for solving differential equations could be used to determine a solution numerically and subsequently a known integration method, such as a finite-difference based integration scheme or Monte Carlo integration scheme, may be used to determine the integral over the computed function. Such two-step approach however is computationally expensive and may introduce errors in the solution. Additionally, in case the differential equation is an integro-differential equation, this two-step approach cannot be used for computing the integral transform term as this term is part of the differential equation that needs to be solved.

To address these problems a computer **104** is configured to efficiently and accurately compute an integral transform of an unknown function $f$ which is described in terms of data and/or a differential equation and boundary conditions. To that end, the computer may include comprise a neural network module **116**, comprising a neural network for learning a surrogate function $G$. In an embodiment, the computer may be configured as a hybrid computer, which comprises a classical processor, e.g. a CPU and a special purpose processor that is especially adapted to process operations associated with the neural network. For example, in an embodiment, the neural network may be a classical deep neural network (DNN). In that case, the special purpose processor may comprise one or more GPUs and/or TPUs for processing neural network related operations. In another embodiment, the neural network may be a quantum neural network (QNN). In that case, the special purpose computer may comprise a quantum processing unit (QPU) comprising addressable qubits which may form a network of connected qubits that can be trained.

As shown in the figure, the computer is configured to receive information, e.g. data and/or a model in the form of a differential equation and boundary conditions, about the object or process, which may be used to train the neural network. Further, in some embodiments it may receive information **112** about characteristics of the target function that one would like to compute. This information may, for example, include a kernel function for calculating a certain integral transform of the target function, wherein the computed integral transform may provide information about a certain characteristic, e.g. physical or statical quantity, of the target function.

To train the neural network, the computer comprises a training module **118** that is configured to train the neural network based on a loss function. The loss function may be constructed such that the neural network is trained based on the physics and dynamics underlying the object or the process. To that end, the computer may include a transformation module **120** configured to transform the data and/or the differential equation of the target function and associated boundary conditions into transformed data and a transformed differential equation and associated boundary conditions respectively. In case the differential equation only includes differential terms of the target function, the transformed differential equation may be expressed in terms of the derivates of surrogate function $G_\theta(x,t)$. In other embodiments, the differential equation may be an integro-differential equation that includes both derivatives and integral transforms of the target function. In that case, the transformed differential equation in terms of the derivates of surrogate function $G_\theta(x,t)$ and the surrogate function $G_\theta(x,t)$ itself. Hence, the transformed differential equation does not include references to the target function, its derivates or integrals of the target function.

The transformation module uses a functional relation between the surrogate function $G$, the kernel function $k$ and the target function to transform the data and/or the differential equation into transformed data and/or a transformed differential equation of the surrogate function $G$ respectively. The functional relation requires that the derivative of the surrogate function $G$ with respect to an input variable equals a product of the kernel function $k$ and the target function.

When using such functional relation, an integral transform $\int_{x_1}^{x_2} k(x)f(x,t)dx$ **112** may be efficiently and accurately computed based on the surrogate function as $G_\theta(x_2,t) - G_\theta(x_1,t)$.

The transformation module thus transforms the differential equation of the target function into a transformed differential equation which is expressed in terms derivatives of the surrogate function and, optionally, in terms of the surrogate functions (e.g. in case the differential equation is an integro-differential equation). The transformed data and/or transformed differential equation may then be used by training module **118** to train the neural network based on a loss function so that the trained neural network learns the surrogate function. An example of a PDE loss function is the Mean-Squared Error loss function, which may be written as

$$L(\theta) = \mathbb{E}_{x \sim \Gamma} \left[ F(x, \theta)^2 \right]$$

where $F$ represents the differential equation's difference between left hand side and righthand side, which is a function of x over the domain $\Gamma$ and the trial function's model parameters $\theta$. In a similar way, loss function terms for the boundary condition, data and other terms may be introduced.

Thus, in an embodiment, the training of the neural network may be based on the transformed data along (for example if there is no knowledge about a differential equation that describes the behaviour of the object or process that is analysed). In another embodiment, the neural network may be trained on the transformed differential equation and associated boundary conditions (for example if no data associated with the behaviour of the object or process is available). In yet another embodiment, the training of the neural network may be based both on the transformed data and the transformed differential equation.

As will be described hereunder in more detail, the training module may be configured to train the neural network in an optimization loop in which the neural network is trained by variationally updating one or more variational parameters of the neural network based on the loss function until an optimal setting of the variational parameters is reached.

The computer may further comprise an integration module **122** which is configured to use the neural network to compute an integral transform by computing $G_\theta(x_2,t)$ - $G_\theta(x_1,t)$. The integration module may be used to compute an integral transform in different scenarios. In a first embodiment, the computer may be configured to determine an integral transform for determining a desired characteristic **112**, e.g. a physical or statical quantity, of an object or process described by a differential equation **110**. In that case, the training module may train the neural network to learn the surrogate function. Once the training is finished, the integral transform may be determined based on the trained neural network.

In the case the computer is used to solve an integro-differential equation, which includes one or more integral transforms, integral transforms need to be computed during training. In particular, each epoch of the optimization loop values of $G$ need to be computed as part of the training. Once the optimization loop provides an optimized surrogate function $G_\theta(x,t)$, this function may be used determine a solution $f(x,t)$ **120** of the integro-differential equation using the relation between $G$, the kernel $k$ and $f: \frac{\partial G_\theta(x,t)}{\partial x} = k(x)f(x,t)$ .

The computed integral transform **118** or the computed solution of the integro-differential equation may then be used by a module **122** that is configured to analyze the object or process and/or to control the object or process based on the computed solution.

Thus, as shown in **Fig. 1** the embodiments described in the application allow computation of an integral transform of an unknown function by training a physics information neural network to learn a surrogate function, wherein the wherein the derivative of surrogate function $G$ is a product of the kernel function $k$ and the target function $f$. The integral transform can be computed without knowledge of the function, just by computing two values of the surrogate function. Therefore, providing a very efficient method for computing integral transforms which are a very important tool in engineering and science. Further, the method eliminates the need to determine a solution to the differential equation before computing the integral transform. This substantially eliminates errors in the determination of an integral transform. Additionally, the method can also be used to efficiently and accurately compute so-called integro-differential equations which define a very important class of differential equations in engineering and science but a known to be very difficult to solve. Known physics informed neural networks scheme for solving differential equations are not capable of solving integro-differential equations.

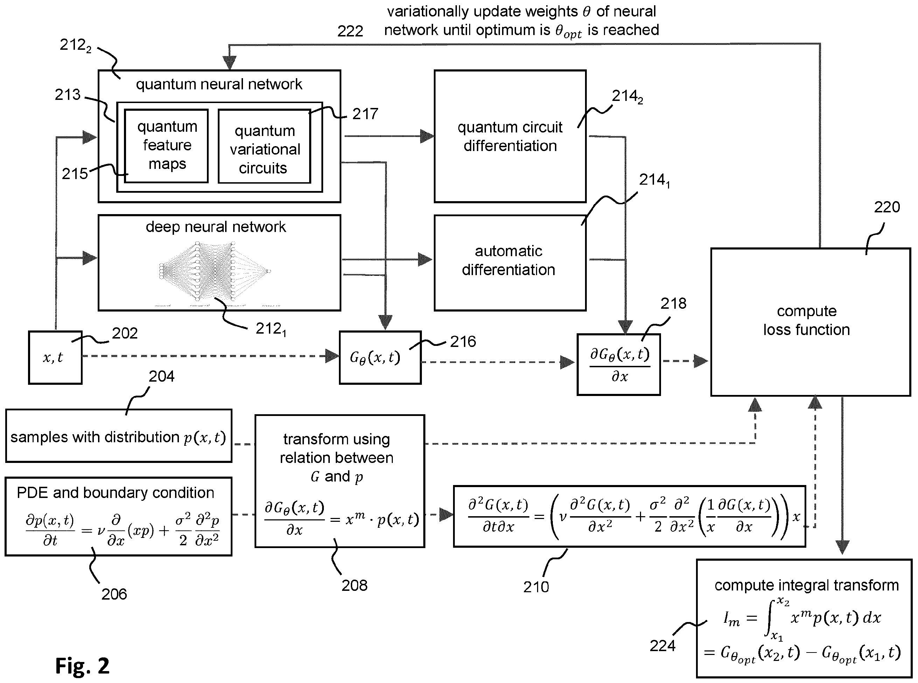

**Fig. 2** depicts a method for computing an integral transform according to an embodiment of the invention. In particular, the figure depicts a computer-implemented method for computing an integral transform for determining a characteristic of the behaviour of a certain object or process, e.g. a physical object or process, associated with a certain unknown target function. The method may be configured to train a neural network, a deep neural network **212$_1$** or a quantum neural network **212$_2$**, in an optimization loop **222** to learn a surrogate function $G$ based on a loss function **220** that includes the physics and/or dynamics underlying the behaviour of the object or process and to determine characteristics about the object or the process based on the trained neural network.

As described with reference to **Fig. 1**, the behaviour of the object or process may be described by a function that may have multiple input variables. In the example in **Fig. 2** an example is illustrated wherein the behaviour of the object or process is stochastic. In that case the behaviour may be described in terms of a system of stochastic differential equations (SDEs), which are very difficult to analyse. It is known that SDEs may be rewritten in a partial differential equation (PDE) for the probability density function $p$ of the stochastic variables of the system. This PDE is also known as the Fokker Planck equation. To extract meaningful information from probability density function $p$, one has to compute a particular integral transform of this function: $I_m = \int_{x_1}^{x_2} x^m p(x,t)\,dx$ , which is referred to as the $m$-th moment of a probability density function with the $m$-th power of $x$ being the kernel function.

Following the scheme as described with reference to **Fig. 1**, the $m$-th moment of a probability density function **224** may be computed based on the learned surrogate function G as $G_{\theta_{opt}}(x_2,t)$ - $G_{\theta_{opt}}(x_1,t)$, wherein $x_1$ and $x_2$ are two extremal values for input variable $x$ and wherein the functional relation **208** between $G$ and $p$ is provided by $\frac{\partial G_\theta(x,t)}{\partial x} = x^m \cdot p(x,t)$. Hence, to enable the train the neural network to learn the surrogate function based on the physics that underlies the physics of the underlying stochastic process, both the data and the PDE needs to be transformed based on the functional relation between $G$ and $p$. This way, a transformed PDE **210** can be formed which is expressed in terms of derivatives of $G$. This way, the transformed PDE and the transformed data can be used in the training of the neural network. In particular, the transformed PDE is used to construct a loss function **220**, which is used in a variational optimization loop **222**, wherein the variational parameters of the neural network may be updated based on the computed loss function until an optimal parameter set is determined. This way, the neural network is trained based on the data and a loss function so that the trained neural network represents surrogate function $G$.

The neural network may be a parameterized function that can be used to approximate the surrogate function based on trainable parameters and a loss function wherein the loss function may include derivatives and/or integrals of the surrogate function and, optionally, the surrogate function itself. This means that the neural network that is used must be differentiable with respect to the input parameters and the tunable parameters.

As shown in **Fig. 2**, in an embodiment, a classic deep neural network **212₁** may be trained to learn the surrogate function $G$ **216.** In order to compute the derivatives of the surrogate function **216** with respect to the input variables, an automatic differentiation module **214₁** may be used. Here, automatic differentiation is an operation which is distinct from symbolic differentiation and numerical differentiation. A backpropagation scheme and a gradient descent scheme may be used to adapt the weights of the neural network such that the loss function is minimized. Examples of training physics informed classical deep neural networks are describe in the article by Raissi et al, as referred to in the background of this application.

In a further embodiment, instead of a classical neural network, a quantum neural network (QNN) **212₂** may be used as a trainable parameterized function for learning the surrogate function. In this embodiment, a set of coupled quantum elements, e.g. qubits, may be controlled so that (parameterized) quantum operations, e.g. one-gate and two-gate operations, can be executed. These operations may be described in the form of a quantum circuit. To train the quantum neural network to learn the surrogate function based on the loss function, differential quantum circuits (DQCs) may be used. A DQC may include a quantum feature map **215** and a variational quantum circuit **217**, wherein the feature map generates basis functions by encoding the dependence on the input variables into rotation angles of single qubit gates. The variational quantum circuit subsequently generates combinations of the basis functions. A derivative of a DQC may be computed analytically by a quantum circuit differentiation module **214₂** without relying on numerical methods, which is important as numerical differentiation using near term quantum hardware is not reliable. Examples of training quantum neural networks based on DQCs are describe in WO2022/101483 as referred to in the background of this application.

Hence, as shown by **Fig. 2**, the embodiments in this application allows efficient computation of integral transforms, such as moments, of learnable functions, including functions that are associated with stochastic processes. The computations can be performed using different differentiable universal function approximators (UFA), including a classical and quantum neural network as well as other UFAs such as quantum kernel functions.

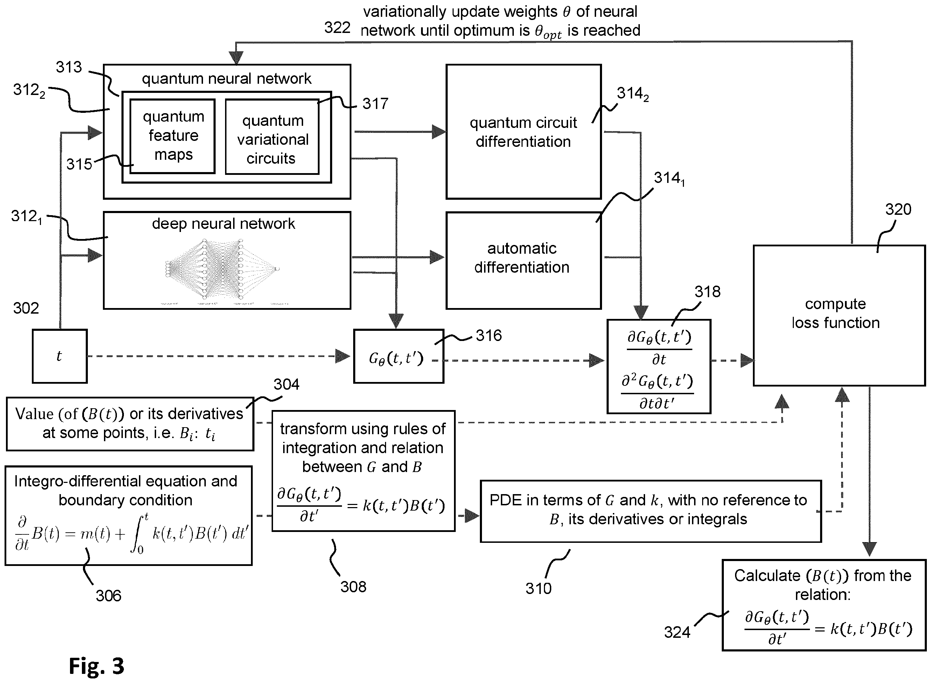

**Fig. 3** depicts a method for computing an integral transform according to another embodiment of the invention. In particular, the figure depicts a computer-implemented method for computing an integral transform for determining a solution to an integro-differential equation of a certain target function $B$, which may be associated with one or more function variables **302** (input variables), in this particular example time variable $t$. The integro-differential equation, which may in general include one or more derivatives of function $B$, one or more integrals over $B$, and, optionally function $B$ itself, may describe the behaviour of an object or a process, e.g. a physical process. The method is configured to train a neural network, a deep neural network **312₁** or a quantum neural network **312₂**, to learn a surrogate function $G$ based on a loss function **320** and to determine the solution of the integro-differential equation based on the trained neural network. In contrast, the embodiment described with reference to **Fig. 2**, the integro-differential equation **306** in this example may include one or more integral terms of the target, hence integral transforms of the function $B$ need to be determined during training.

To train the surrogate function based a loss function that includes the physics that underlies the behaviour of the object or process, information about the process is needed. This information may include data **304** such as values of $B$ or values of one or more derivatives of $B$ for certain values of the one or more input variables, an integro-differential equation 306 describing the behaviour of the object or process and boundary conditions. In order to use this information for the loss function, the information needs to be expressed in terms of surrogate function $G$ and its derivates. Therefore, a transform **308** may be defined that provides a functional relation between the surrogate function $G$ and the target function *B*, wherein the relation may include the condition that the derivative of the surrogate function is equal the product of the kernel function and the target function. This relation may be used to transform the data and the differential equation.

The transformed differential equation **310** may be used to define the loss function **320** for training the neural network, wherein in this embodiment the loss function is not only expressed in terms derivatives of function *G* but also in terms of the surrogate function *G* itself. During training, both the surrogate function *G* **316** and the derivates of the surrogate function G **318** are determined through either automatic differentiation **314₁** (in case of a classic neural network) or by differentiable quantum circuits **314₂** (in case of a quantum neural network). These values are evaluated by a loss function **320** in a variational optimization loop **222**, wherein the variational parameters of the neural network may be updated based on the computed loss function until an optimal parameter set is determined in a similar way as described with reference to **Fig.** 2. After training the solution of the integro-differential equation can be computed using the trained neural network representing the learned surrogate function and the relation between $\frac{\partial G}{\partial t}$, the kernel *k* and *B*. In this particular case, the kernel may be selected as the unity function.

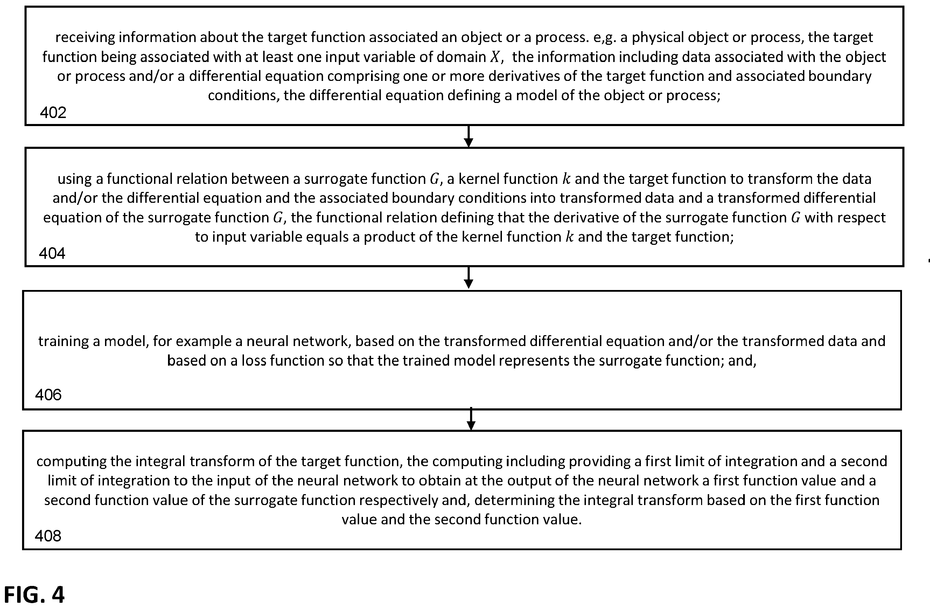

**Fig. 4** depicts a flow chart for computing an integral transform according to an embodiment of the invention. As shown in this figure, the method may include a step **402** of receiving information about the target function associated an object or a process, e,g. a physical object or process. Here, the target function may be associated with at least one input variable of domain *X*. In an embodiment, the information may include data associated with the object or process. In another embodiment, the information may include a differential equation comprising one or more derivatives of the target function and associated boundary conditions, wherein the differential equation describes (part of) the behaviour of the object or process. Hence, different types of information associated with the object or a process may be used either alone or in combination in the process of computing the integral transforms.

Further, the method may comprise a step **404** wherein a functional relation between a surrogate function *G*, a kernel function *k* and the target function may be used to transform the information, i.e the data and/or the differential equation, into transformed information, i.e. transformed data and/or a transformed differential equation of the surrogate function *G*. Here, the functional relation may define that the derivative $\frac{\partial G}{\partial x}$ of the surrogate function with respect to variable *x* equals a product of a kernel function *k* and the target function.

The method may also include a step **406** of training a neural network based on the transformed information i.e. the transformed data and/or differential equation, and based on a loss function so that the trained neural network represents the surrogate function and a step **408** of computing the integral transform of the target function, the computing including providing a first limit of integration and a second limit of integration to the input of the neural network to obtain at the output of the neural network a first function value and a second function value of the surrogate function respectively and, determining the integral transform based on the first function value and the second function value.

Thus, the embodiments in this disclosure combine physics-informed (quantum) neural networks and automatic integration to formulate a very efficient quantum-compatible machine learning method of performing a general integral transform on a learned function. Generally, the embodiments relate to a method of computing an integral transform for an unknown function *f*:

$$f : \mathbb{R} \times \mathbb{R}^n \to \mathbb{R}$$
$$(s, \boldsymbol{v}) \mapsto f(s, \boldsymbol{v}). \qquad (1)$$

wherein some information about the function *f* is known in terms of values of *f* or its derivatives at certain parts of the domain and/or in terms of one or more (integro-)differential equations of the unknown function *f* in terms of variables *s* and *v*. The method may be configured to express, in the PINN-setup, the integral transform

$$\hat{f}(s', \boldsymbol{v}) = \int_{s_a(s')}^{s_b(s')} k(s, s') f(s, \boldsymbol{v}) \, ds, \qquad (2)$$

where the kernel function *k(s,s')* ∈ *R*, and the integral limits $s_a(s')$ ∈ *R*, and $s_b(s')$ ∈ *R* are known functions. The method may further be configured to use this expression to estimate the integral transform of the function, without explicitly learning the function itself or the solve the integro-differential equations for the unknown function *f*.

To that end, a surrogate function *G* may be defined

$$G : \mathbb{R} \times \mathbb{R} \times \mathbb{R}^n \to \mathbb{R}$$
$$(s, s', \boldsymbol{v}) \mapsto G(s, s', \boldsymbol{v}) \tag{3}$$

in terms of the unknown function $f$ and known function $k$ as

$$\left. \frac{\partial G(q, s', \boldsymbol{v})}{\partial q} \right|_{q=s} = k(s, s') f(s, \boldsymbol{v}). \tag{4}$$

If $s_a$ and $s_b$ are functions of $s'$, we define k$(s,s')$ = 0 if $s < s_a(s')$ or $s > s_b(s')$. The next step is to recast the data and the (integro-) differential equations that are given in terms of $f$ in terms of the surrogate function G. This is done by making the substitutions

$$f(s, \boldsymbol{v}) \to \frac{1}{k(s, s')} \left. \frac{\partial G(q, s', \boldsymbol{v})}{\partial q} \right|_{q=s}$$
$$\int_{s_a}^{s_b} k(s, s') f(s, \boldsymbol{v}) \, ds \to G(s_b, s', \boldsymbol{v}) - G(s_a, s', \boldsymbol{v}). \tag{5}$$

With these substitutions, the entire problem is now stated in terms of $G$ and its derivatives, without any reference to $f$, its derivatives or its integral. The universal function approximator (UFA) in the PINN-setup, such as a classical neural network or quantum neural network, can now be used to learn $G$. The layout of the algorithm is provided in Algorithm 1

---

**Algorithm 1** Computing integral transform of $p(x,t)$

---

1: Input data and/or de's, initial/boundary (analytic/data)

2: Approximate density function from data - $\tilde{p}(x,t)$

3: Set up the **NN** or **DQC** (M) to learn $G_\theta(x,t)$ such that $\frac{\partial G_\theta(x,t)}{\partial x} = k(x)\tilde{p}(x,t)$ .

4: Train at time $t$ = 0 using data (optionally with differential constraints) to obtain,

$$M \to \theta_{\mathrm{opt}} = \operatorname*{argmin}_\theta \mathcal{L}[G_\theta, \tilde{F}_{\mathrm{data}}] \tag{6}$$

(6)

5: where $\mathcal{L}$ (.) is a user defined loss function.

6: Train time-dependent function $G_\theta(x,t)$ with help of differential equation in Eq 5 (if differential equation is provided),

$$M \to \tilde{F}[d_{s,t}G_\theta, G_\theta, (x,t)] = 0$$
$$\theta_{\mathrm{opt}} = \operatorname*{argmin}_\theta \mathcal{L}[G_\theta, \tilde{F}] \tag{7}$$

7: Compute $I_g = G_{\theta\mathrm{opt}}(x_{\mathrm{final}}, t) - G_{\theta\mathrm{opt}}(x_{\mathrm{init}}, t)$

---

Hence, any complex integral transform may be determined by computing two values of G using the transform limits $x_{init}$ and $x_{final}$ as input. As will be shown hereunder in greater detail, the method of computing integral transforms based on the leaned surrogate function G, has many different applications both in science and engineering as well as statistic. Hereunder, some application are described.

Quantitative finance - dealing with stochastic evolution

Stochastic evolution plays a pivotal role in quantitative finance. They emerge in computing trading strategies, risk, option/derivative pricing, market forecasting, currency exchange and stock price predictions, determining insurance policies among many other areas. Stochastic evolution is governed by a general system of stochastic differential equations (SDEs) can be written as,

$$dX_t = r(X_t, t)dt + \sigma(X_t, t)dW_t \qquad (8)$$

where Xt is the stochastic variable parameterised by time t (or other parameters). The deterministic functions r and $\sigma$ are the drift and diffusion processes respectively. And W is a stochastic Wiener process, also called the t Brownian motion. The stochastic component introduced by the Brownian motion makes the SDEs distinct from other types of differential equations and resulting in them being non differential and hence being difficult to treat.

One way to treat the SDEs is to rewrite them in the form of a partial differential equation for the underlying probability density function (PDF) $p(x, t)$ of the variables $x$ and $t$. This resulting equation is known as the Fokker-Planck (FP) equation or the forward Kolmogorov equation and can be derived using Ito's lemma, starting from the SDE equation,

$$\frac{\partial p(x,t)}{\partial t} = -\frac{\partial}{\partial x}[r(x,t)p(x,t)] + \frac{1}{2}\frac{\partial^2}{\partial x^2}[\sigma^2(x,t)p(x,t)]$$
$$(9)$$

Solving the FP equation results in learning the PDF. The PDF itself does not provide insights into the statistical properties. In order to extract meaningful information from the distribution, the standard tool used is to compute the moments which help describe the key properties of the distribution by computing the integral of a certain power of the random variable with its PDF in the entire variable range. Essentially, it helps in building the estimation theory, a branch in statistics that provides numerical values of the unknown parameters on the basis of the measured empirical data that has a random com- ponent. Further it is also a backbone of the statistical hypothesis testing, an inference method used to decide whether the data at hand sufficiently supports a particular hypothesis. The m-th order moment $I_m$ is defined as the integral transform of the PDF with the $m$-th power of $x$ as the kernel, that is

$$I_m = \int_{x \in \mathcal{X}} x^m p(x,t)dx. \qquad (10)$$

In quantitative finance, the four most commonly used terms derived from moments are;

1. mean, a first order moment which computes the expected return of a financial object
2. variance, derived from second order moment which measures of spread of values of the object in the distribution and quantifies risk of the object
3. skewness, derived from third order moment which measures how asymmetric the object data is about it's mean
4. kurtosis, derived from fourth order moment which focuses on the tails of the distribution and explains whether the distribution is flat or rather with a high peak

Higher order moments have also been considered to derive more intricate statistical properties of a given distribution.
In this embodiment, we specifically focus on option pricing. An option is a financial object which provides the holder with the right to buy or sell a specified quantity of an underlying asset at a fixed price (also called the strike price or exercise price) at or before the expiration date of the option. Since it is the right and not an obligation, the holder can choose not be exercise the right and allow the option to expire. There are two types of options:

1. Call options: A call option gives the buyer of the option the right to buy the underlying asset at a fixed price, called the strike price, at any time prior to the expiration date. The buyer pays a price for this right. If at the end of the option, the value of asset is less than the strike price, the option is not exercised and expired worthless. If on the other hand, the value of the asset is greater than the strike price, the option is exercised and the buyer of the option buys the asset at the exercise price. And the difference between the asset value and the exercise price is the gross profit on the option investment.

2. Put options: A put option gives the buyer the right to sell the underlying asset at a fixed price, again called strike price or the exercise price at or prior to the expiration period. The buyer pays a price for this right. If the price of the underlying asset is greater than the strike price, the option is not exercised and is considered worthless. If on the other hand, the price of the asset is lower than the strike price, the option of the put option will exercise the option and sell the stock at the strike price.

The value of an option is determined by a number of variables relating to the underlying asset and financial markets such as current value of the underlying asset, variance in the value of the asset, strike price of the option, and time to expiration of the option. Let us first consider the call option. Let $X_t$ denote the price of the stock at time t. Consider a call option granting the buyer the right to buy the stock at a fixed price $K$ at a fixed time T in the future, with the current time being $t = 0$. If at the time $T$, the stock price $X_T$ exceeds the strike price $K$, the holder exercises the option for a profit of $X_T - K$. If on the other hand, $S_T \leq K$, the option expired worthless. This is the European option, meaning it can be exercised only at a fixed date $T$. An American or an Asian call option allows the holder to choose the time of exercise. The payoff of the option holder at the time $T$ is thus,

$$(X_T - K)^* = \max\{0, X_T - K\} \qquad (11)$$

To get the present value of this payoff, we multiply by a discount factor $e^{-rT}$, with $r$ a continuously compounded interest rate. Thus the present value of the option is,

$$E[e^{-rT}(X_T - K)^*] \qquad (12)$$

For this expectation value to be meaningful, one needs to specify the distribution of the random variable $X_T$, the terminal stock price. In fact, rather than specifying the distribution at a fixed time, one introduces the model for the dynamics of the stock price. The general dynamics for a single random variable $X_t$ is given by the SDE in Eq 8.

In the simplest case corresponding to the European call/put option, both r and σ are constants and the payoff is computed at terminal time $T$ which leads to analytical closed form solution to the problem. However, for more complex Asian/American type options where the interest rate and volatility are current asset price dependent, and where the payoff is path dependent, there are no analytical solutions, thus leading to one resorting to Monte-Carlo techniques.

We apply our integral transform method to compute the expected payoff for an option governed by the Ornstein-Ghlenbeck (OG) stochastic process to compute the expected payoff in the European and Asian call options. OG process describes the evolution of interest rates and bond prices. OG process also de- scribes the dynamics of currency exchange rates, and is commonly used in Forex pair trading. Thus benchmarking option pricing with a SDE evolution governed by OG process produces a strong validation for our method. The OG process is governed by the SDE,

$$dX_t = \nu(\mu - X_t)dt + \sigma dW_t \qquad (13)$$

where the underlying parameters $(v, \mu, \sigma)$ are the speed of reversion v, long time mean level μ, and the degree of volatility σ. Here we consider the process such that the speed of reversion v > 0, while the long term mean level $\mu = 0$. The corresponding PDE governing the evolution of the PDF function $p(x, t)$ for this process is called the Fokker-Planck equation and is given by,

$$\frac{\partial p(x,t)}{\partial t} = \nu \frac{\partial}{\partial x}(xp) + \frac{\sigma^2}{2}\frac{\partial^2 p}{\partial x^2} \qquad (14)$$

Computing expected payoff for European options

The European option expected payoff depends on the price of the option at the terminal time $T$. For simplicity, we consider the call option governed by the OG process for which the non-discounted expected payoff is $E[(X_T - K)^*]$. The discounted payoff can similarly be computed with a slight additional computational overhead. The expected value can be written as,

$$E[(X_T - K)^*] = (E[X_T] - K)^* = \left(\int_{x \in \mathcal{X}} xp(x, T)dx - K\right) \qquad (15)$$

where $p(x,T)$ is the PDF for the OG process at terminal time $T$. This process is simplistic enough to allow us to analytically derive the PDF valid for the Dirac delta initial distribution $p(x,t_0)$ peaked at $x_0$ that evolves as,

$$p(x,t) = \sqrt{\frac{1}{\pi * \text{Norm}}} \exp\left[-\frac{(x - x_0 \exp[-\nu(t - t_0)])^2}{\text{Norm}}\right] \tag{16}$$

where $\text{Norm} = \frac{\sigma_1^2}{\nu_1}\frac{\sigma^2}{\nu}(1 - exp[-2\nu(t - t_0)])$ with chosen parameters $\sigma = 1, \nu = 5, x_0 = 2, t_0 = 0$ and terminal time $T = 0.5$.

In order to compute the expected payoff, we mimic the case where we first generate 50 independent samples of x from the distribution $p(x, t)$ in the domain [-5,5] at time point $t = 0.1$. Subsequently we assume that the PDF is unknown and we are only provided the data samples. Further, we are given the PDE equation of the form Eq 14. Next, we use a $2 \times 10 \times 10 \times 1$ dense NN to learn the G function such that,

$$\frac{\partial G}{\partial x} = x \cdot p(x,t) \tag{17}$$

Further, we transform the PDE expressed in the form of $p(x, t)$ into a PDE written in the form of a *G* function using Eq. 17 and 14,

$$\frac{\partial^2 G}{\partial x \partial t} = \left(\nu\frac{\partial^2 G}{\partial x^2} + \frac{\sigma^2}{2}\frac{\partial^2}{\partial x^2}\left(\frac{1}{x}\frac{\partial G}{\partial x}\right)\right)x \tag{18}$$

For training, we first generate the $(x,t)$ grid of size (50, 20) where x is linearly spaced from [-5, 5] and t is linearly spaced in the domain [0.1,0.5]. At $t = 0.1$, we train our NN using the Adam optimiser to minimise the loss function corresponding to the data-sample, while for the rest of the time points in the grid, we use the Eq 18 guidance.

After training, we test our NN performance by first comparing the shape of $\frac{\partial G}{\partial x}$ learnt by NN vs the input shape $\frac{\partial G}{\partial x}$ of $x \cdot p(x,t)$. In order to provide a robust estimate of our expected payoff estimate, we also compute the standard deviation of payoff. The standard deviation is given by,

$$\text{std} = E[X_T^2] - E[X_T]^2 = \int_{x \in \mathcal{X}} x^2 p(x,T)dx - \left(\int_{x \in \mathcal{X}} xp(x,t)dx\right)^2 \tag{19}$$

To estimate $E[X_T^2]$, we again use our integral transform method. We follow the same PDF sample generation process and subsequently estimating the expressional form of the PDF as highlighted before. Further, we consider the same size of the NN with the same training configuration as before to learn the function *G'*,

$$\frac{\partial G'}{\partial x} = x^2 p(x,t) \tag{20}$$

Further, we transform the PDE expressed in the form of $p(x, t)$ into a PDE written in the form of a *G'* function using Eq 20 and 14,

$$\frac{\partial^2 G'}{\partial x \partial t} = \left( \nu \frac{\partial}{\partial x} \left( \frac{1}{x} \frac{\partial G'}{\partial x} \right) + \frac{\sigma^2}{2} \frac{\partial}{\partial x^2} \left( \frac{1}{x^2} \frac{\partial G'}{\partial x} \right) \right) x^2 \quad (21)$$

We compare the learnt shape of $\frac{\partial G}{\partial x}$ with the input shape of $x^2 p(x,t)$ to showcase that the NN has learnt the correct time-dependent shape. Subsequently, for the strike price of $K$ = 0.06 and terminal time $T$ = 0.5, we estimated the expected payoff at the terminal time with two evaluations each of the learnt $G$ and $G'$ function, at points $x_{final}$ = 5 and $x_{init}$ = -5 and compare the NN result with the finite difference integration method using Scipy scipy.integrate.quad method and with the analytical method given the Gaussian distribution expressional form of the OG PDF. We report the expected payoff value in Table 1:

|  | NN integral | Analytical method |
| --- | --- | --- |
| Expected payoff | 0.1247+0.2739 | 0.1047+0.3151 |

Computing expected payoff for Asian options

Next we consider the Asian 'path dependent' price option where we dynamics of the underlying asset $X_t$ is governed by the OG process. The Asian option requires simulating the paths of the asset not just at the terminal time $T$, but also at intermediate times. For these options, the payoff depends on the average level of the underlying asset. This includes, for example, the non-discounted payoff $(\overline{X} - K)^+$ where,

$$\overline{X} = \frac{1}{m} \sum_{i=1}^{m} X_{t_j} \qquad (22)$$

For some fixed set of dates $0 = t_0 < t_1 \cdots < t_m = T$, with $T$ being the date where the payoff is received. The expected payoff is then $E[(\overline{X} - K)^+]$.

We consider that the expected payoff depends on the value of the asset at times $t$ = [0.1,0.2,0.3,0.4,0.5]. We follow the same procedure as above where we learn the $G$ and $G'$ functions. Since, we have integrated the FP PDE from time [0.1,0.5], this immediately provides us with the expected payoff and the standard deviation at each of the intermediate time points. With this, we can query the values at each time points with 2 evaluations of the trained model. The resulting expected payoff for the Asian price option for the strike price of $K$ = 0.06 is reported in Table 2:

|  | NN integral | Analytical method |
| --- | --- | --- |
| Expected payoff | 0.1419+0.3161 | 0.4635$\pm$0.2965 |

Computing expected payoff for Basket options

The above work focused on SDEs and the corresponding FP equations with two dimensions. Here we look at an $N$ + 1 dimensional SDE and FP. In real world, an option depends on multiple underlying assets and hence strategies for a generalized FP equation solving is extremely relevant. These type of options are called basket options whose underlying is a weighted sum or average of different assets that have been grouped together in a basket. Consider a multivariate $N$ dimensional SDE system of $\boldsymbol{X_t} = (X_{1,t} \cdots X_{N,t})$ with an M-dimensional Brownian motion $\boldsymbol{W_t} = (W_{1,t} \cdots W_{M,t})$ given by,

$$d\boldsymbol{X_t} = \boldsymbol{r}(\boldsymbol{X_t}, t)dt + \boldsymbol{\sigma}(\boldsymbol{X_t}, t)d\boldsymbol{W_t} \qquad (23)$$

where $\boldsymbol{X_t}$ and $\boldsymbol{r}(\boldsymbol{X_t}, t)$ are $N$ dimensional vectors and $\sigma(X_1, t)$ is a $N \times M$ matrix.
In this specific case, we consider a basket option governed by two assets $X_1$ and $X_2$ where only provided with the data samples $(x_1, x_2, t)$ from the underlying PDF $p(x_1, x_2, t)$. We consider that the underlying PDF corresponds to the independent OG processes of the with the following PDF,

$$p(x_1, x_2, t) = \sqrt{\frac{1}{\pi * \text{Norm}_1}} \exp\left[-\frac{(x_1 - x_{0,1}\exp[-\nu_1(t - t_{0,1})])^2}{\text{Norm}_1}\right] \times$$

$$\sqrt{\frac{1}{\pi * \text{Norm}_2}} \exp\left[-\frac{(x_2 - x_{0,2}\exp[-\nu_2(t - t_{0,2})])^2}{\text{Norm}_2}\right] \tag{24}$$

Where $\text{Norm}_1 = \frac{\sigma_1^2}{\nu_1}\left(1 - exp[-2\nu_1(t - t_{0,1})]\right)$ with $\sigma_1 = 1$, $\nu_1 = 5$, $x_{0,1} = 2$, and $t_{0,1} = 0$, while

$\text{Norm}_2 = \frac{\sigma_2^2}{\nu_2}\left(1 - exp[-2\nu_2(t - t_{0,2})]\right)$ with $\sigma_2 = 2$, $\nu_2 = 3$, $x_{0,2} = 2$, and $t_{0,2} = 0$.

The objective is to compute the expected payoff $E[\bar{E} - K]$ at terminal time $T$ where,

$$\bar{X} = \frac{1}{2}(X_{1,T} + X_{2,T}) \tag{25}$$

Computing $E[\bar{X}]$ amounts to computing the maximum likelihood estimation

$$E[\bar{X}] = \int_{x_1} \int_{x_2} \frac{1}{2}(x_1 + x_2)p(x_1, x_2, T)dx_1 dx_2 \tag{26}$$

We first generate 50 independent samples each of $x_1$ and $x_2$ in the domain [-5, 5] at each time point. Further we generate the data-samples at 15 different times points between [0.3,1]. Subsequently we assume that the PDF is unknown and we are only provided the data samples. We then learn the histogram from the data and estimate the expressional form of the PDF function. Next, we use a $3 \times 10 \times 10 \times 10 \times 1$ dense NN to learn the function $G$ such that,

$$\frac{\partial G}{\partial x_1 \partial x_2} = k(x_1, x_2)p(x_1, x_2, t) \tag{27}$$

where $k(x_1, x_2) = \frac{1}{2}(x_1 + x_2)$ .

We train our NN with the Adam optimiser with a learning rate = 0.005 and a total of 20000 epochs. After training, we test our NN performance by first comparing the shape of $\frac{\partial G}{\partial x_1 \partial x_2}$ learnt by NN vs the input shape of $k(x_1,x_2)p(x_1,x_2,t)$ corresponding to evolution at t = 0.3, 0.65, 1.0 respectively.

In order to validate our method, we estimate the maximum likelihood estimation at each time point with two evaluations of the learnt G function, at points $(x_1,x_2)_{final}$ = (5, 5) and $(x_1,x_2)_{init}$ = (-5,-5) and compare the NN result with the finite difference integration method using Scipy scipy.integrate.quad method and with the analytical method given the Gaussian distribution expressional form. The results validates the performance of our integral transform method for the specific case chosen.

Calculation of Moment of Inertia

Due to the ubiquity of applied statistic, integral transforms of the type discussed in Section III A, namely moments, find applications in a wide range of fields. In addition, integral transforms of the same type also find applications in physics and engineering, distinct from those due to applied statistics. In fact, the mathematical concept was so named due to its similarity with the mechanical concept of moment in physics. The n-th moment of a physical quantity with density distribution p(r), with respect to a point ro, is given by

$$\mu_n(\boldsymbol{r}_0) = \int |\boldsymbol{r} - \boldsymbol{r}_0|^n \rho(\boldsymbol{r}) d^3 r. \qquad (28)$$

As an integral transform, the input function here is $\rho(r)$ and the kernel $k(r,r_0) = |r - r_0|^n$. Examples of physical quantities whose density could be represented by $\rho(r)$ are mechanical force, electric charge and mass. Here are some examples of moments in physics:

1. Total mass is the zeroth moment of mass.
2. Torque is the first moment of force.
3. Electric quadruple moment is the second moment of electric charge.

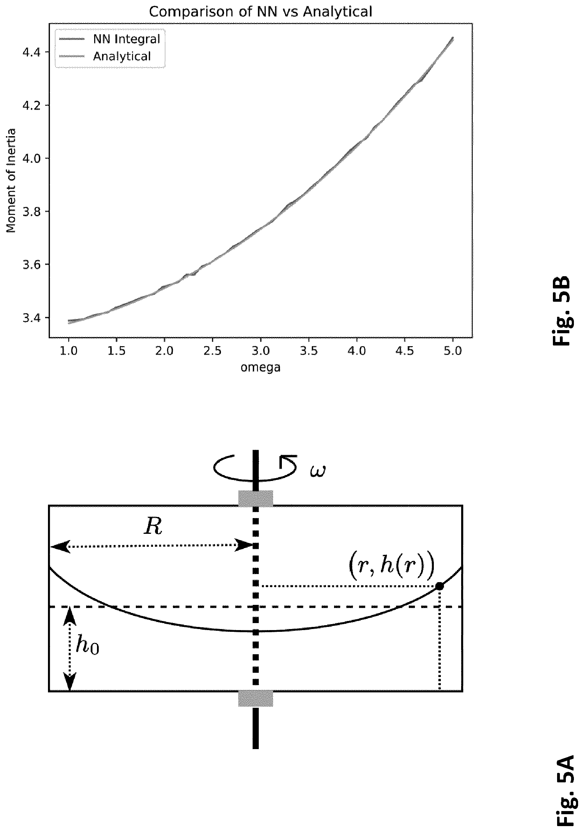

Here, we will look at the particular example of calculating the moment of inertia of a rotating body. Moment of inertia is the second moment of mass and the relevant moment of inertia for studying the mechanics of a body is usually the one about its axis of rotation. A spinning figure skater can reduce their moment of inertia by pulling their arm in and thus increase their speed of rotation, due to conservation of angular momentum. Moment of inertia is of utmost importance in engineering with applications ranging from design of flywheels to increasing the manoeuvrability of fighter aircrafts.
For our example, we consider a rectangular vessel containing a liquid of density ρ that is rotated at an angular frequency $\omega$ about one of its face-centered axes, as shown in **Fig. 5A**. When the vessel is at rest, the liquid is initially at a uniform height h0. As the frequency of rotation ω is increased, the shape of the surface of the liquid changes due to centrifugal force and the distribution of mass changes. This causes the moment of inertia to change as well. For simplicity, we will consider an ideal incompressible fluid and the width of the vessel (perpendicular to radial direction) to be negligible.
The equilibrium height $h(r)$ of the surface of the liquid at radial distance r from the axis of rotation at frequency of rotation ω is given by Bernoulli's principle, which is represented in differential form as

$$\partial_r \left( \frac{1}{2} \rho r^2 \omega^2 + \rho g h(r) + p_{\text{air}} \right) = 0, \qquad (29)$$

where ρ is the density of the liquid, g is the acceleration due to gravity and pair is the air pressure. The moment of inertia of this system about its axis of rotation is given by

$$I = \int_0^R r^2 \rho h(r) w dr = \rho w \int_0^R r^2 h(r) dr, \qquad (30)$$

where R is the radius of the container and w is the width. ρh(r)wdr is the total mass at distance r and we are calculating the second moment of mass. Conservation of total fluid volume fixes the constant of integration.
Assuming the situation is not simple enough to solve analytically, conventionally one first solves Eq. (29) for $h(r)$ and then proceed to perform the integral Eq. (30) numerically. In contrast, by combining PIML and autointegration, I is calculated directly, without first having to find $h(r)$ to perform this integral transform and the results are given in **Fig. 5B**. To accomplish this, we first transform $h(r)$ in Eq. (29) according to Eq. (4) using

$$\frac{\partial G(r)}{\partial x} = r^2 h(r) \qquad (31)$$

resulting in

$$\partial_r \left( \frac{1}{2} \rho r^2 \omega^2 + \rho g \left( \frac{1}{r^2} \frac{\partial G(r)}{\partial x} \right) + p_{\text{air}} \right) = 0. \qquad (32)$$

Now, the moment of inertia I is given by

$$I = \rho w (G(R) - G(0)). \qquad (33)$$

We use a dense NN to calculate the surrogate function G according to the physics informed neural networks strategy in Raissi et al. [6], where the loss terms are constructed according to the PDE in Eq. (32). Upon convergence, the moment of inertia is calculated according to Eq. (33) and the result is plotted along with the analytical solution for various values of $\omega$ in **Fig. 5B**. Note that we have not calculated the intermediate quantity $h(r)$ with the NN to obtain this final result.

Electric Potential of Dynamic Charge Density

The integral transforms so far have used kernels of the form of a positive power of x. However, the applications of integral transformation is very broad and encapsulate techniques like Fourier transformation, Green's functions, fundamental solutions, and so on which rely on different kernel functions. There are various standard transformations like Fourier transformation whose kernel does not depend on the problem at hand; the kernel of fundamental solutions of PDEs and Green's functions, on the other hand, can depend on the PDEs and their boundary conditions. Though covering all types of integral transforms will not be practical, in order to illustrate the broad applicability of this technique, we will demonstrate the use of another type of kernel function.

The Laplace equation is a PDE that arises in physical laws governing phenomenon ranging from heat transfer to gravitational force. Here, we find the electric potential in free space due to a distribution of electrical charge evolving in time according to the advection-diffusion equation, using the 3D Laplace equation. We will calculate the electric potential through integral transform using the fundamental solution of the 3D Laplace equation as the kernel

$$k(\boldsymbol{r}, \boldsymbol{r}_0) = \frac{1}{|\boldsymbol{r} - \boldsymbol{r}_0|}, \qquad (34)$$

without explicitly calculating the charge distribution using the advection-diffusion equation.

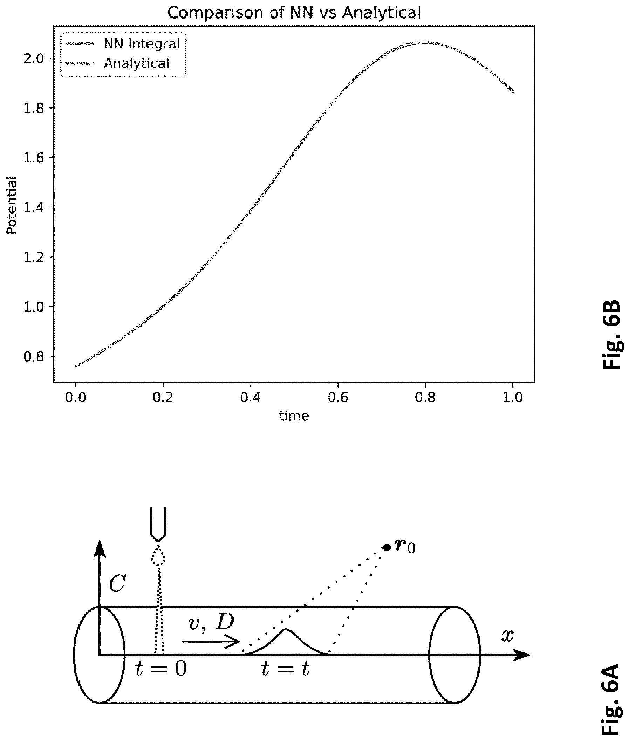

Consider a drop of charged ions dropped into a tube of (neutral) flowing liquid, as shown in **Fig. 6A**. For simplicity, we consider the flow to be one-dimensional. The ions drift and diffuse with time as governed by the advection-diffusion equation, moving forward with velocity v and diffusing with diffusion coefficient $D$. Our goal is to find the electric potential at an arbitrary point $(x_0, y_0)$ due to the ions, as a function of time.

The concentration field $C(x,t)$ of ions in one-dimensional flow along y = 0 at point x at time t is given by the advection-diffusion equation

$$\frac{\partial C}{\partial t} + v \frac{\partial C}{\partial x} = D \frac{\partial^2 C}{\partial x^2}, \qquad (35)$$

where v is the fluid velocity and D is the diffusion constant.

The potential at a point ro = (xo,yo) is given by the integral

$$V(\boldsymbol{r}_0, t) = \lambda \int_{-\infty}^{\infty} \frac{1}{|\boldsymbol{r} - \boldsymbol{r}_0|} C(x,t) dx, \qquad (36)$$

where $\lambda$ is simply a constant of proportionality and $r = (x,0)$. As before, we first transform $C(x,t)$ in Eq. (35) according to Eq. (4) using

$$G(\boldsymbol{r}, \boldsymbol{r}_0, t) = \frac{1}{|\boldsymbol{r} - \boldsymbol{r}_0|} C(x,t) \qquad (37)$$

resulting in

$$|\boldsymbol{r} - \boldsymbol{r}_0| \frac{\partial G}{\partial t} + v \frac{\partial}{\partial x} \left( |\boldsymbol{r} - \boldsymbol{r}_0| G \right) = D \frac{\partial^2}{\partial x^2} \left( |\boldsymbol{r} - \boldsymbol{r}_0| G \right). \qquad (38)$$

The potential is now given by

$$V(\boldsymbol{r}_0, t) = \lambda(G(\infty, \boldsymbol{r}_0, t) - G(-\infty, \boldsymbol{r}_0, t)). \qquad (39)$$

We use a dense NN to calculate the surrogate function G according to the physics informed neural networks scheme, where the loss terms are constructed according to the PDE in Eq. (38). Upon convergence, the potential is calculated according to Eq. (39) by selecting two extreme points beyond which the change in *G* is sufficiently small. The result is plotted along with the analytical solution in **Fig. 6B**. Note that we have not calculated the intermediate quantity C(x,t) with the NN to obtain this final result.

Population Growth

In an embodiment, an integro-differential equation may be solved using the integral transform computation schemes as described with reference to the embodiments in this disclosure. The integral transform computation scheme of **Fig. 3** may be used to solve an integro-differential equation that is referred to as an inhomogeneous Volterra-Fredholm integro-differential equation, which may be used to describe the evolution of female population, given by

$$\frac{\partial}{\partial t} B(t) = m(t) + \int_0^t k(t, t') B(t')\, dt'; B(0) = 1, \qquad (40)$$

where $B(t)$ is the number of female births at time *t*, *k* is the net maternity function and m is the rate of female births due to the population already present at *t* = 0. Further, $k(t,t') = t - t'$ and $m(t) = (6(1 + t) - 7exp(t/2) - 4\,sin(t))$ and the initial boundary conditions is *B(0)* = 1 and attempt to solve this.

The Leibniz integral rule may be used to compute the total derivative of Eq. (40), which yields

$$\frac{\partial^2}{\partial t^2} B(t) = \frac{\partial}{\partial t} m(t) + \int_0^t B(t')\, dt', \qquad (41)$$

since the contribution from the boundary term disappears. We do this to avoid the singularity that would otherwise arise from the inverse of the original kernel in the integral. Then, we transform it according to Eq. (5) with

$$\left. \frac{\partial}{\partial t} G(t) \right|_{t=t'} = B(t') \qquad (42)$$

to obtain

$$\frac{\partial^3}{\partial t^3} G(t) = \frac{\partial}{\partial t} m(t) + G(t) - G(0). \qquad (43)$$

As per the original boundary, $\frac{\partial}{\partial t} G(0) = 1$. In addition, by setting t = 0 in Eq. (40), we get an additional boundary condition $\frac{\partial^2}{\partial t^2} G(0) = m(0) = -1/4$. We set $G(0) = 0$ by choice.

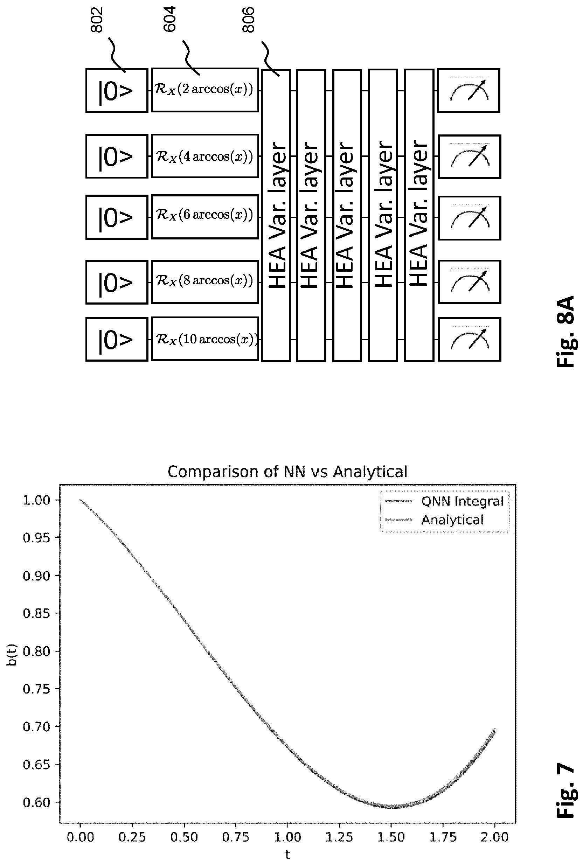

The surrogate function $G(t)$ according to the physics informed neural networks strategy as described with reference to **Fig. 3** was computed, where the loss terms are constructed according to the PDE in Eq.(43). As the QNN, a 4 qubit DQC quantum circuit was constructed with a Chebyshev map as the feature map (with a circuit depth of four) and a Hardware Efficient Ansatz as the variational circuit and total magnetization as the cost function. The boundary conditions were enforced using exponential pinning of the QNN and the optimization was performed at 25 uniformly spaced points in the domain using ADAM. The derivative of $G(t)$ learned in 411 epochs is plotted along with the analytical solution for the unknown function b(t) in **Fig. 7**.

**Fig. 8A-8D** depicts a further example wherein a quantum neural network is learned to integrate a simple PDF, in this particular case a Gaussian distribution, to find its mean value (expectation value). As a training data set, the analytical function may be $xp(x)$ where the probability density function $p(x)$ is given by:

$$p(x) = \exp(-(x - \mu)^2/2\sigma^2)/\sqrt{(2\pi\sigma^2)},$$

representing a Gaussian distribution with mean $\mu$ and standard deviation $\sigma$. We set up an artificial task to learn $\mu$ given data on $xp(x)$. We pick $\mu = 3$, $\sigma = 1$, and a domain $x$ from -3 to 9 divided into 100 points for the training stage. Next, a QNN was trained such that $\frac{dNN}{dx} = xp(x)$ using 60 epochs of ADAM at 0.3 learning rate, followed by 10 epochs of LBFGS at 0.2 learning rate. **Fig. 8A** depicts the QNN that was used for the computation. As shown in the figure, the QNN is of the DQC type with 5 qubits **802**, a Chebyshev Tower feature map **804** and a five layer Hardware Efficient variational ansatz **806**. After applying the method an estimated $\mu = 3.006331$ was found.

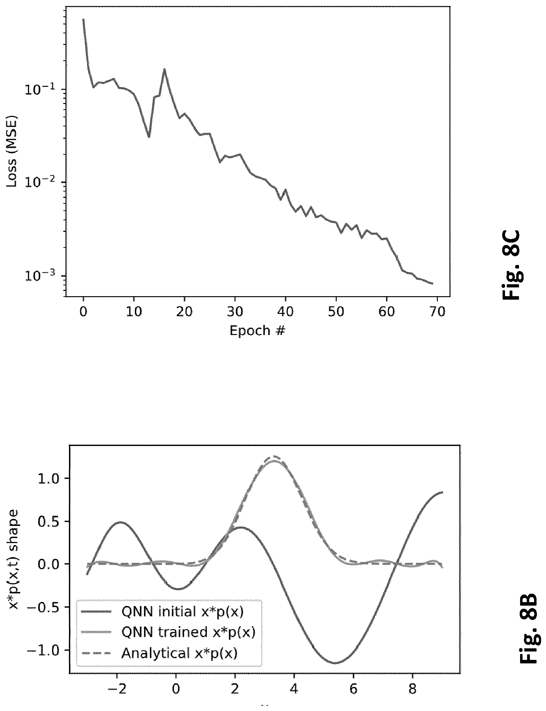

In **Fig. 8B** the trained result of $xp(x)$, the initial untrained result, and the reference background. The results the training of the QNN to learn $xp(x)$ where $p(x)$ is a Gaussian distribution. Fig. **8C** depicts the loss as it decreases during training. Epoch # on the x-axis is a combination of 60 ADAM epochs and 10 LBFGS epochs. Good correspondence of both the trained function and the expectation value matches within 0.2%.

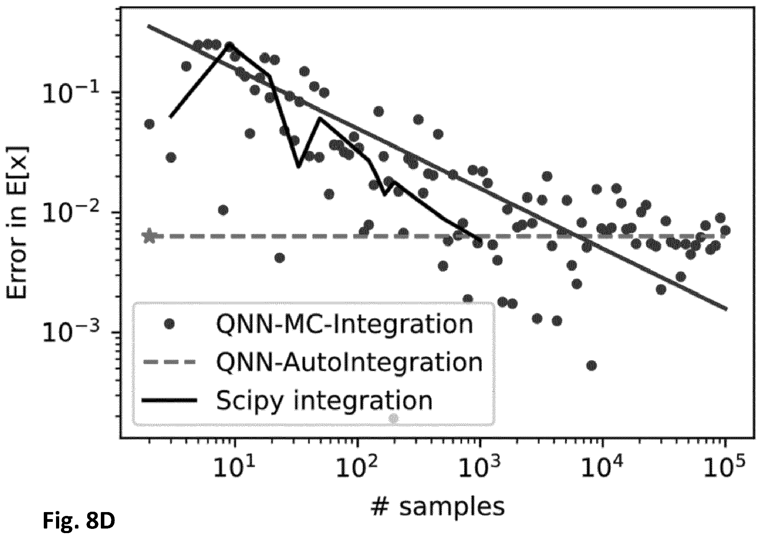

**Fig. 8A-8C** show how a QNN can learn to integrate probability density functions to find moments such as the expectation value of the underlying stochastic process. A comparison with Monte-Carlo methods and direct integration was performed, showing a difference in the number of effective evaluations of the QNN. **Fig. 8D** shows the absolute error of each method, with respect to the exact value $\mu = 3$, as a function of number of samples/queries to the objective function. When using the method according to the embodiments in this application (referred to as QNN-autointegration in the plot), the number of queries is fixed at two points for a 1D integration. If instead, the QNN was used to learn $QNN(x) = p(x)$ directly, one could instead resort to Monte Carlo methods or direct integration methods (blue and black respectively). As shown in the graph, this would incur significant overhead. For Monte-Carlo integration, the error goes down as $\propto 1/\sqrt{M}$ for $M$ samples. For direct integration, the trend is similar with a slightly better performance. To reach a similar accuracy/error, these methods require at least $10^3$ to $10^4$ samples to accurately integrate the function and obtain the moment. This graph shows that the invention shows a great outperformance, underlying the usefulness of the method in speeding up integration tasks.

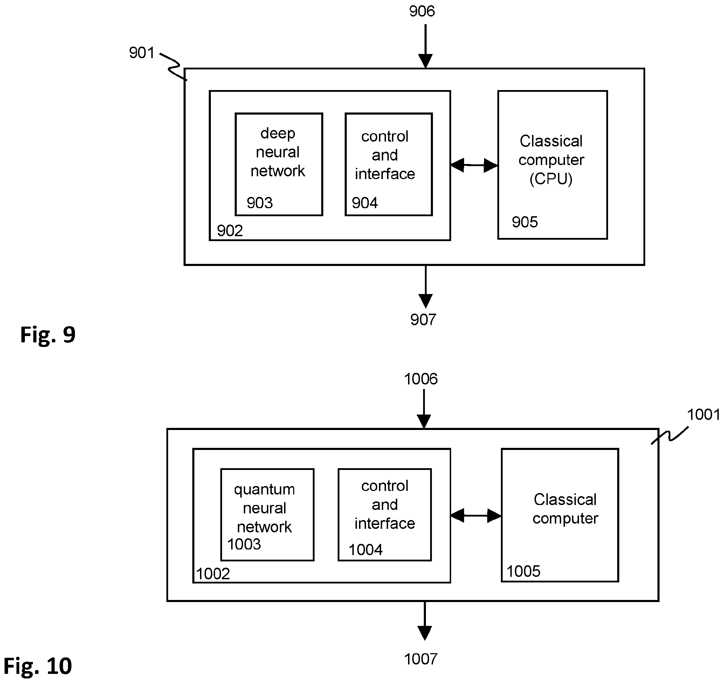

**Fig. 9** depicts a computer system for executing methods for computing an integral transform as described by the embodiments in this disclosure. The computer system **901** may include a special purpose processor **902** comprising a classical universal function approximator **903**, for example a deep neural network, and a controller system **904** comprising input output (I/O) devices forming an interface between the special purpose computer and a classical computer **905**, which is configured to control the special purpose processor. The computer system comprises of a (purely classical information) input **906** and an (purely classical information) output **907**. Input data may include information about the integral transform that one wishes to compute. The information may further include information that is needed to train the deep neural network such as data and/or a differential equation and boundary conditions describing the behaviour of an object or a process.

The deep neural network may include an input layer comprising input nodes which are configured to encode the input data. The number of input nodes may depend on the dimensionality of the problem. Further, the neural network may include a number of hidden layers comprising hidden nodes whose weights and biases are trained iteratively on the basis of a loss function.

**Fig. 10** depicts a computer system for executing methods for computing an integral transform as described by the embodiments in this disclosure. The computer system **1001** may include a quantum computer system **1002** comprising a quantum neural network **1003**, e.g. a gate-based qubit quantum processor comprising a grid of coupled qubits, and a controller system **1004** comprising input output (I/O) devices which form an interface between the quantum processor and the outside world, e.g. the one or more classical processors of a classical computer **1005**. For example, the controller system may include a microwave system, an optical system and/or an electrical system for generating microwave, optical and/or electromagnetic (e.g. voltage) pulses which are used to manipulate the qubits. Further, the controller may include readout circuitry for readout of the qubits. For at least a part such readout circuitry may be located or integrated with the chip that includes the qubits. The system may further comprise a (purely classical information) input **1006** and an (purely classical information) output **1007**. Input data may include information about the integral transform that one wishes to compute. The information further include information that is needed to train the quantum neural network such as data and/or a differential equation and boundary conditions describing the behaviour of an object or a process. The input data may be used by the system to classically calculate values, e.g. parameter settings, which may be used to initialize the quantum circuit that is implemented on the quantum processor. Similarly, output data may include loss function values, sampling results, correlator operator expectation values, optimization convergence results, optimized quantum circuit parameters and hyperparameters, and other classical data. Each of the one or more quantum processors may comprise a set of controllable two-level systems referred to as qubits. The two levels are |0> and |1> and the wave function of a $N$-qubit quantum processor may be regarded as a complex-valued superposition of $2^N$ of these distinct basis states. Examples of such quantum processors include noisy intermediate-scale quantum (NISQ) computing devices and fault tolerant quantum computing (FTQC) devices.

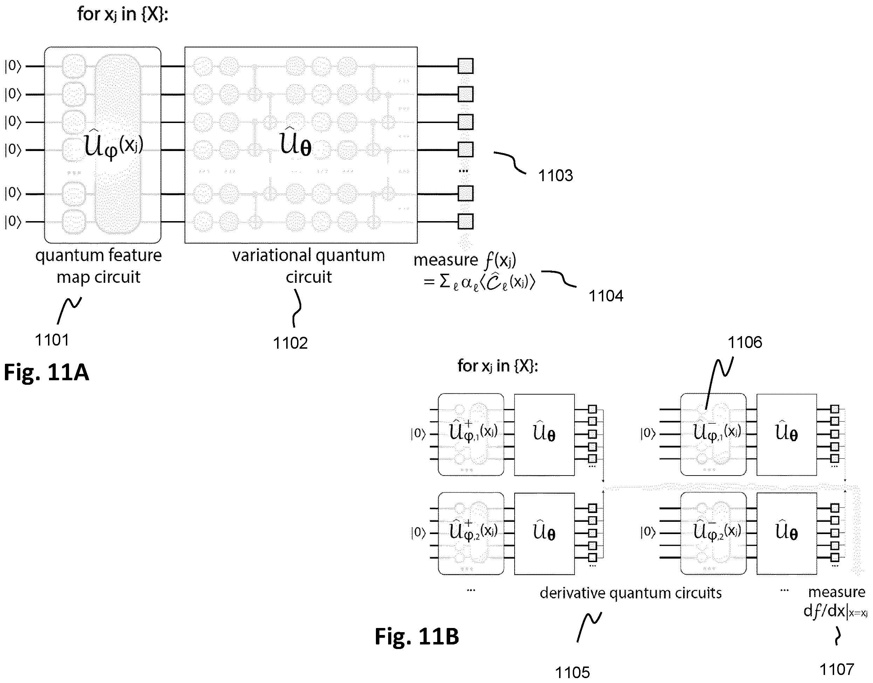

**Fig. 11** depicts a quantum neural network that can be used for computing an integral transform according to the embodiments described in this application. In particular, **Fig. 11A** illustrates a circuit representation of a quantum neural network comprising a quantum feature map **1101** and a variational quantum circuit $U_\theta$ **1102** (a variational ansatz). The quantum feature map actuates a unitary evolution over the qubits, which is a function of differential equation parameter $x$ and encodes the $x$-dependence of the circuit. The output of the quantum neural network may be measured based on a cost function Hamiltonian that comprises a set of operators $C_\ell$. Based on the measurements, the trial function $f(x)$ **1104** around a certain point $x_j$, may be computed as a potential solution to a differential equation as described with reference to the embodiments in this application. **Fig. 11B** depicts a similar structure but instead is used to compute the derivative of the function $f$ with respect to $x$ **1107,** using derivative quantum circuits **1105**, and evaluated at $x_j$. One difference with the circuits depicted in **Fig 11A.** is the parametric shift of variables in unitary $U_\phi(x_j)$ **1106.** The measurement results from function and derivate measurements are classically post-processed, and combined for all j in $x_j$, from $X$, and both variational coefficients theta and cost structure coefficients alpha may be optimized in a quantum-classical hybrid loop in order to minimize the loss function value for the theta and alpha settings. The resulting trained QNN outputs $G$ for different values of $x$.

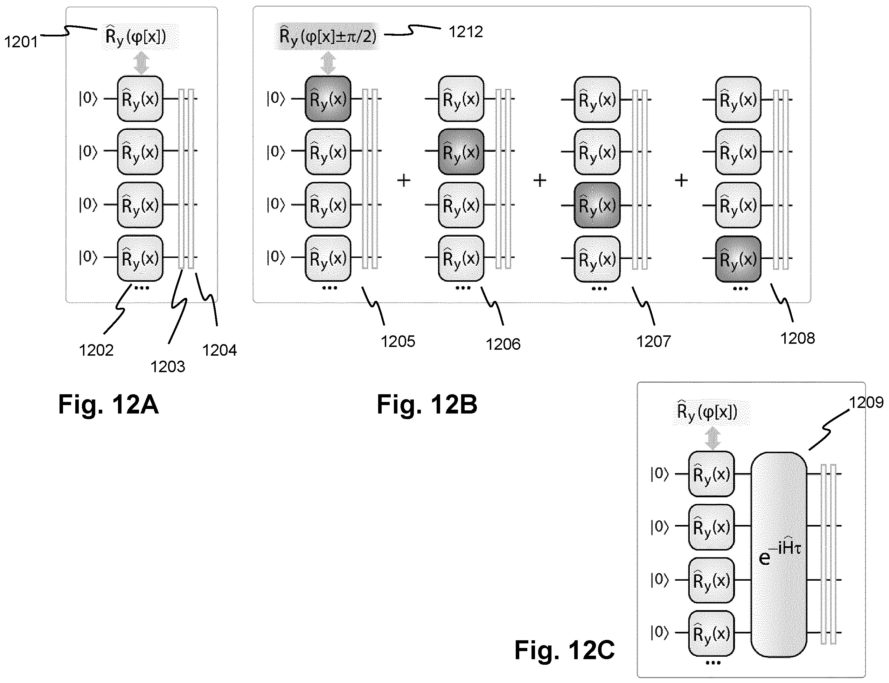

**Fig. 12** schematically depicts examples of differentiable quantum feature maps. In particular, **Fig. 12A** illustrates an example of a quantum feature map, which is here shown as an example of a 'product' type feature map, where single qubit rotations (here chosen as Ry) act on each qubit individually and are parametrized by a function of variable x. Reading from left to right going forward in time, the rest of the circuit is schematically summarized, with thin pink and green blocks depicting variational ansatz and cost function measurement. For the feature nonlinear encoding the non-linear function phi(x) is used as an angle of rotation. The product feature map can be further generalized to several product layers, and different functions {PHI}. For example, several feature maps may be concatenated to represent a multivariable function. **Fig. 12B** illustrates an example of a quantum circuit for a product feature map. Differentiation over variable $x$ follows the chain rule of differentiation, with the expectation value of the derivative written as a sum of separate expectations with shifted phases, repeated for each x-dependent rotation.

**Fig. 12C** illustrates an example of a product feature map, where the layer of rotation follows by the unitary evolution generated by Hamiltonian $H$. For complicated multiqubit Hamiltonians the encoded state comprises of exponentially many unique x-dependent amplitudes. The time interval tau can be set variationally, or annealed from zero to a finite value during the optimization procedure.

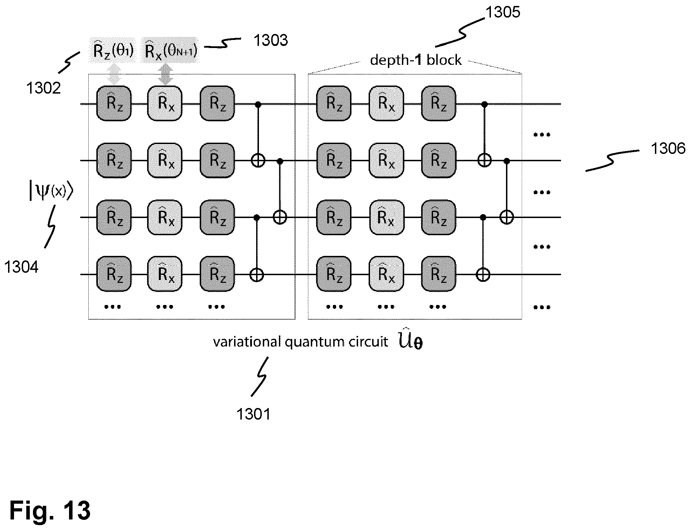

**Fig. 13** depicts an example of a variational quantum circuit. In particular, **Fig 13** shows a variational ansatz **1301** in the hardware-efficient form. It consists of parametrized rotation layers forming an RzRxRz pattern, such that arbitrary single qubit rotations can be implemented. Variational angles theta are set for each rotation individually **1302**,**1303**. The rotation layer is applied to a qubit initial state Psi(x) **1304** coming from the preceding quantum circuit, the feature map circuit. The variational rotations are then followed by entangling layers chosen as controlled NOT (CNOT) operations between nearest-neighboring qubits. The blocks **1305** of "rotations-plus-entangler" are repeated d times **1306** to form a full variational circuit U(theta) **1303.**

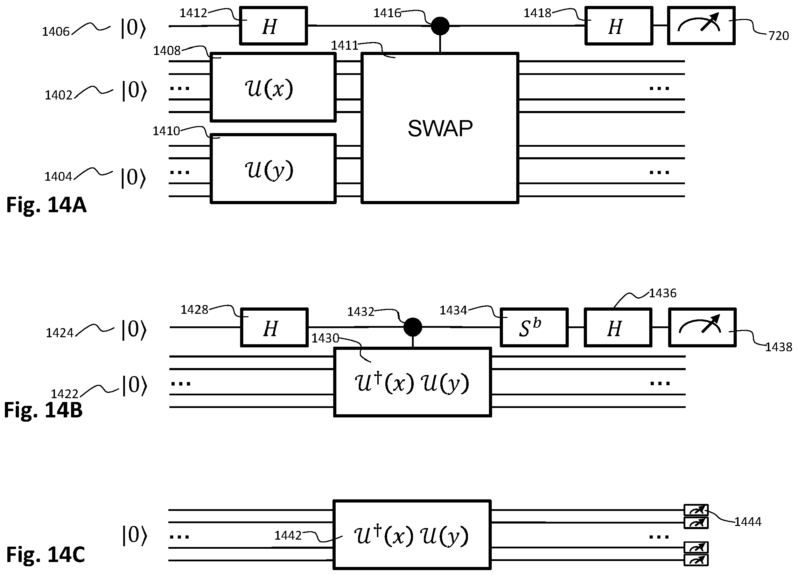

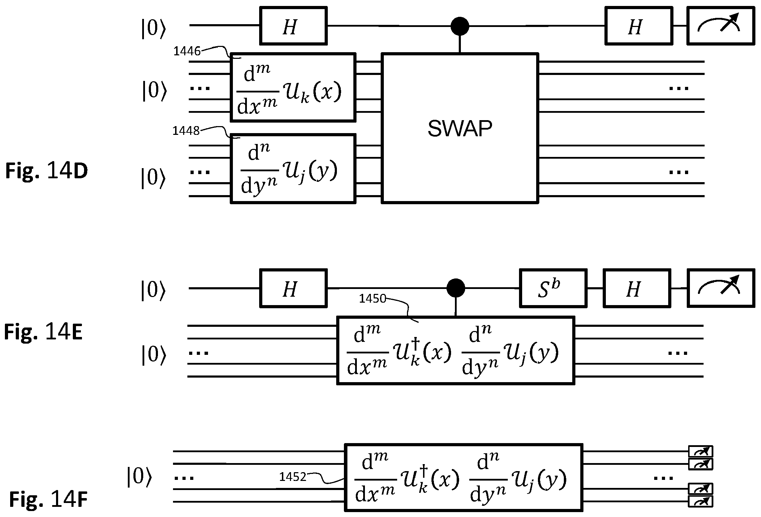

**Fig. 14A-C** depict circuit diagrams for evaluating a quantum kernel, respectively a derivative thereof, according to various embodiments. Other embodiments may use different circuits to measure the overlap of two wave functions. In particular, **Fig. 14A** shows a circuit diagram for implementation of a quantum kernel of the form $k(x,y) = |\langle \psi(x)|\psi(y)\rangle|^2$. In this example, a so-called SWAP-test is used to measure the expectation value $|\langle \psi(x)|\psi(y)\rangle|^2$ of an overlap of two wave functions $|\psi(x)\rangle$ and $|\psi(y)\rangle$ directly. The swap test may be performed by having two parallel registers of $N$ qubits, one for a first kernel parameter $x$ **1402** and one for a second kernel parameter $y$ **1404**, plus a single ancillary qubit **706.** Thus, the swap test requires $2N + 1$ qubits where $N$ is the number of qubits used to express $|\psi(x)\rangle$.

A quantum feature map $\mathcal{U}$ is applied to the registers for $x$ and $y$, respectively, in order to obtain $|\psi(x)\rangle = U(x)|0\rangle$ **1408** and $|\psi(y)\rangle = U(y)|0\rangle$ **1410.** Because the same feature map is applied to both registers, (conjugate) symmetry of the quantum kernel is ensured. A Hadamard gate $H$ **1412** is applied to the ancillary qubit, and then a controlled-SWAP operation **1414** is performed between all qubits of the other registers, conditioned on the ancilla qubit with a control operation **1416.** The controlled swap onto the size $2N$ register is made up of controlled swap on the $n^{th}$ qubit of each of the two size $N$ registers, for $n \in 1: N$. Subsequently, another Hadamard gate **1418** is applied to the ancillary qubit and the qubit is then measured in the Z basis **1420** to read the kernel value $|\langle \psi(x)|\psi(y)\rangle|^2$. If $x$ and $y$ are equal, the SWAP operation will not do anything, and hence the two Hadamard gates will combine to an X gate and the measurement results always exactly 1. If $x$ and $y$ are different, the controlled-SWAP gate will incur a phase-kickback on the ancillary qubit, which is detected as an average value of the measurement between 0 and 1. This way, the kernel overlap can be estimated using this circuit, which is physically implementable even on current-generation qubit-based quantum computers.

**Fig. 14B** shows a circuit diagram for an alternative implementation of a quantum kernel. Using this circuit, the real and imaginary parts of the overlap $\langle \psi(x)|\psi(y)\rangle$ may be measured by means of a so-called 'Hadamard-test'. In this case, both $x$ and $y$ are mapped to one register of $N$ qubits **1422**. A single ancillary qubit **1424** may be used for measurements. Thus, the swap test requires $N + 1$ qubits where $N$ is the number of qubits used to express $|\psi(x)\rangle$.

First a Hadamard gate **1428** is applied to the ancillary qubit. Then, an (undaggered) feature map $U(y)$ is applied to the register to create a quantum state $|\psi(y)\rangle = U(y)|0\rangle$, followed by a daggered feature map $u^\dagger(x)$, in order to obtain a quantum state $|\psi(x,y)\rangle = U^\dagger(x) U(y)|0\rangle$ **1430**. The application of the feature maps is controlled by the ancillary qubit **1432.** This circuit employs the identity

$$\langle \psi(x)|\psi(y)\rangle = \langle 0|\mathcal{U}^\dagger(x)\,\mathcal{U}(y)|0\rangle = \langle 0|\psi(x,y)\rangle$$

An $S$-gate $S^b = \exp(-i\,b\,\pi Z/4)$ is then applied **1434** to the ancillary qubit, where $Z$ is the Pauli-Z operator. It is noted that if $b = 0$, this gate does nothing. This is followed by an Hadamard gate **1436** and then a measurement operation **1438.** Steps **1434-1438** are applied twice, once with $b = 0$ to measure the real part of the overlap $\mathrm{Re}(\langle \psi(x)|\psi(y)\rangle)$ and once with $b = 1$ to measure the imaginary part of the overlap $\mathrm{Im}(\langle \psi(x)|\psi(y)\rangle)$.

Based on these measurements, various kernels may be constructed (typically using a classical computer), e.g.

$$\kappa(x, y) = \langle \psi(x)|\psi(y)\rangle = \mathrm{Re}(\langle \psi(x)|\psi(y)\rangle) + \mathrm{Im}(\langle \psi(x)|\psi(y)\rangle)$$

or

$$\kappa(x, y) = |\langle \psi(x)|\psi(y)\rangle|^2 = \mathrm{Re}(\langle \psi(x)|\psi(y)\rangle)^2 + \mathrm{Im}(\langle \psi(x)|\psi(y)\rangle)^2.$$

**Fig. 14C** shows a quantum circuit that implements arbitrary-order derivatives of the kernel function as overlap measurement by means of a so-called 'Hadamard-test'. As was mentioned earlier, the quantum-kernel based regression methods described herein may be used to numerically solve differential equations. Solving differential equations using a quantum kernel requires evaluating derivatives of the quantum kernel. In this disclosure, the following notation is used to denote derivatives of a quantum kernel $k(x,y)$:

$$\nabla_n^m \kappa(x, y) = \frac{\partial^{m+n}\kappa(x, y)}{\partial x^m \partial y^n}.$$

The circuit structure in **Fig. 14C** is same as in **Fig. 14B**, except for the unitary operators used to create the quantum state. Instead of encoding a quantum state $|\psi(x,y)\rangle = \mathcal{U}^\dagger(x)\,\mathcal{U}(y)|0\rangle$, derivatives of the kernel feature map $U$ are used in the controlled-unitary operation **1440** in order to measure the real and imaginary parts of the overlap

$$\left\langle 0 \left| \frac{\mathrm{d}^m}{\mathrm{d}x^m} \mathcal{U}_k^\dagger(x)\, \frac{\mathrm{d}^n}{\mathrm{d}y^n} \mathcal{U}_j(y) \right| 0 \right\rangle.$$

Here, $k$ and $j$ are indices denoting the gates that are being differentiated with respect to the $x$ and $y$ parameters, respectively; by summing over $j$ and $k$, the full overlap $\left\langle 0 \left| \frac{\mathrm{d}^m}{\mathrm{d}x^m} \mathcal{U}_k^\dagger(x)\, \frac{\mathrm{d}^n}{\mathrm{d}y^n} \mathcal{U}_j(y) \right| 0 \right\rangle$ can be evaluated. Any order of derivative $n$ or $m$, with respect to $x$ or $y$ respectively, can be considered, in any dimension for either. These overlaps can then be used to evaluate kernel derivatives. As an example, this will be shown for $\nabla_1^0 \kappa(x,y)$ where $k(x,y) = |\langle \psi(x)|\psi(y)\rangle|^2$. The first-order derivative in $x$ of the quantum kernel may be determined using the product rule on eq. (X), leading to the following result:

$$\frac{\partial}{\partial x}\kappa(x,y) = \left\langle 0 \left| \mathcal{U}^{\dagger}(y)\frac{\mathrm{d}}{\mathrm{d}x}\mathcal{U}(x)\right| 0 \right\rangle \left\langle 0\left|\mathcal{U}^{\dagger}(x)\,\mathcal{U}(y)\right|0\right\rangle + \left\langle 0\left|\mathcal{U}^{\dagger}(y)\,\mathcal{U}(x)\right|0\right\rangle \left\langle 0\left|\frac{\mathrm{d}}{\mathrm{d}x}\mathcal{U}^{\dagger}(x)\,\mathcal{U}(y)\right|0\right\rangle.$$

This derivative can be evaluated by evaluating $\left\langle 0\left|\mathcal{U}^{\dagger}(y)\frac{\mathrm{d}}{\mathrm{d}x}\,\mathcal{U}(x)\right|0\right\rangle$ and $\left\langle 0\left|\mathcal{U}^{\dagger}(y)\,\mathcal{U}(x)\right|0\right\rangle$ (real and imaginary parts) and taking their conjugates. The latter can be evaluated using the method described above with reference to **Fig. 14B**, the former using the method described with reference to **Fig. 14C**.

The calculations performed to evaluate the quantum kernel can be reused to evaluated the derivatives of the quantum kernel, because the derivatives and the kernel itself are evaluated over the same set of points. To calculate the former, a modified Hadamard test can be used, as will be illustrated with the following example.

In this example, $\mathcal{U}(x)$ is assumed to be of the form $\mathcal{U}(x) = V_0\,\mathcal{U}_{\phi_1}(x)\,V_1\,...\,\mathcal{U}_{\phi_M}(x)\,V_M$ with each $\mathcal{U}_{\phi_j}(x) = \exp\left(-i\,\mathcal{G}_j\,\phi_j(x)\right)$. For this case, $\mathcal{U}'(x) = \sum_{j=1}^{M}\mathcal{U}_{0:j-1}\mathcal{U}_{\phi_j}\left(-i\,\mathcal{G}_j\,\phi'_j(x)\right)\mathcal{U}_{j+1:N}$ with $\mathcal{U}_{j:k} = V_j\,\mathcal{U}_{\phi_1}(x)\,V_{j+1}\,...\,\mathcal{U}_{\phi_k}(x)\,V_k$, where a prime denotes a first-order derivative with respect to x. It can be assumed that the $\mathcal{G}_j$ are unitary - if they were not, they could be decomposed into sums of unitary terms and the relevant Hadamard tests could be calculated for each sum in the term. When $\mathcal{G}_j$ is indeed unitary, it can be implemented as a quantum circuit, so each term in the derivative expansion can then be calculated with two Hadamard tests.

Similar computations can be used to evaluate other derivatives, such as higher-order derivatives, derivatives d/dy with respect to $y$, etc. In general, using the product rule on eq. (X), any derivative can be expressed as sums of products of overlaps with $U(x)$ and $U(y)$ differentiated to different orders. These overlaps can be calculated with two (when the generators are unitary) overlap tests for each gate with $x$ respectively $y$ as a parameter. These overlap evaluations can be reused for calculating different derivatives where the same overlap occurs.

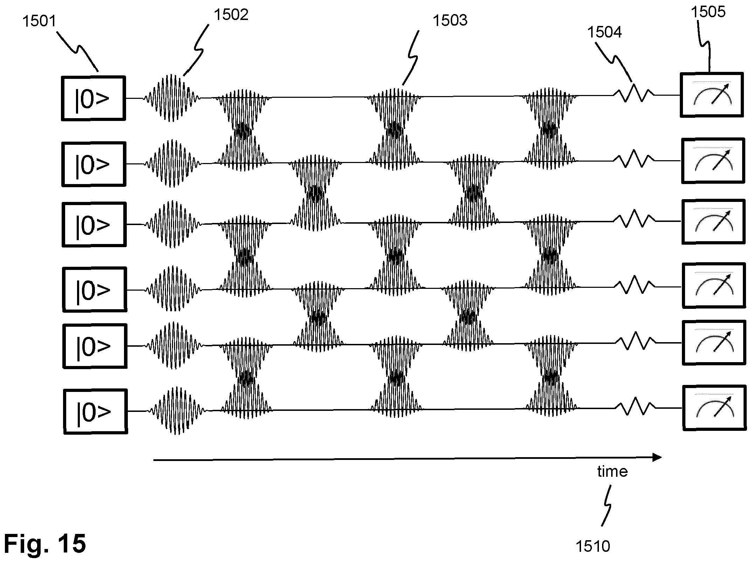

**Fig. 15** is a hardware-level schematic of the actions effectuating the logical operations as defined in a quantum circuit, e.g. DQC quantum circuit. Unitary operators, e.g. those to encode the feature map and derivatives thereof, can be decomposed into a sequence of logical gate operations. These logical gate operations are transformations in a quantum Hilbert space over the qubits encoding an input parameter. In order to transform the internal states of these qubits, a classical control stack is used to send pulse information to a pulse controller that affects one or more qubits. The controller may send a sequence of such pulses in time and for each qubit independently. An initialization pulse is used to initialize the qubits into the $|0\rangle$ state **1502**. Then, for example a series of single-qubit pulses is sent to the qubit array in **1504**, which may apply a single-layer feature map. Additionally, two-qubit pulse sequences can be used to effectively entangle multiple qubits with a feature map **1506**. The duration, type, strength and shape of these pulses determine the effectuated quantum logical operations. **1508** indicates a 'break' in the depicted timeline, which means the sequence of gates may be repeated in a similar fashion in the direction of the time axis **1512.** At the end of the pulse sequences, one or more of the qubits are measured **1510**.

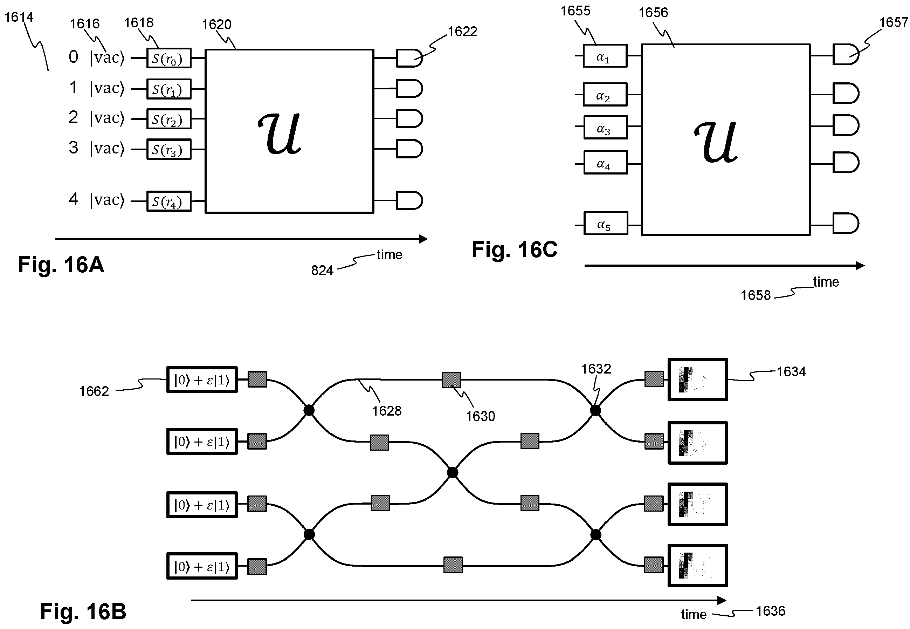

**Fig. 16A** is a hardware-level schematic of the actions effectuating the logical operations shown in circuit diagrams specified for a photonic/optical quantum processor. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send pulse information to a pulse controller that affects one or more modes. The controller may formulate the programmable unitary transformations in a parametrised way.

Initially the modes **1614** are all in the vacuum state **1616**, which are then squeezed to produce single-mode squeezed vacuum states **1618**. The duration, type, strength and shape of controlled-optical gate transformations determine the effectuated quantum logical operations **1620**. At the end of the optical paths, one or more modes are measured with photon-number resolving, Fock basis measurement **1622**, tomography or threshold detectors.

**Fig. 16B** is a hardware-level schematic of the actions effectuating the logical operations shown in circuit diagrams specified for a Gaussian boson sampling device. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send information to optical switches and delay lines. The controller may formulate the programmable unitary transformations in a parametrised way.

Initially the modes **1626** are all in a weak coherent state, which is mostly a vacuum state with a chance of one or two photons and negligibly so for higher counts. Subsequently, the photons travel through optical waveguides **1628** through delay lines **1630** and two-mode couplers **1632** which can be tuned with a classical control stack, and which determines the effectuated quantum logical operations. At the end of the optical paths, one or more modes are measured with photon-number resolving **1634**, or threshold detectors.

**Fig. 16C** is a hardware-level schematic of the actions effectuating the logical operations specified for a photonic/optical quantum processor. The quantum model can be decomposed into a sequence of optical gate operations. These optical gate operations are transformations in the quantum Hilbert space of the photons. In order to transform the internal states of these photons, a classical control stack is used to send information to a universal multiport interferometer. The controller may formulate the programmable unitary transformations in a parameterized way. Initially the photons **1655** are in Fock states, weak coherent states or coherent states. The duration, type, strength and shape of controlled-optical gate transformations determine the effectuated quantum logical operations **1656.** At the end of the optical paths, the modes are measured with photon-number resolving, Fock basis measurement **1657**, tomography or threshold detectors.

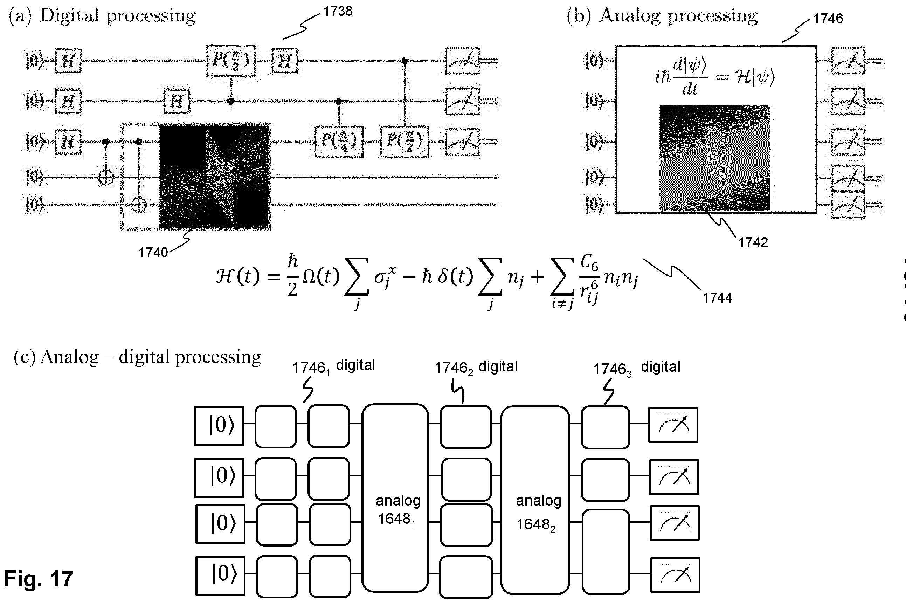

**Fig. 17** is a hardware-level schematic of the actions effectuating the logical operations shown in circuit diagrams which may be executed on a neutral-atom-based quantum computer. On this type of hardware, unitary operators, e.g. those used to encode the quantum feature map and derivatives thereof, can be decomposed in two different kinds of operations: digital or analog. Both of these operations are transformations in the quantum Hilbert space over atomic states.

Schematic (a) of **Fig. 17** depicts a digital quantum circuit **1738**, wherein local laser pulses may be used to individually address neutral atoms to effectuate transitions between atomic states which effectively implement sets of standardized or 'digital' rotations on computational states. These digital gates may include any single-qubit rotations, and a controlled-pauli-Z operation with arbitrary number of control qubits. Additionally, such digital gate operations may also include 2-qubit operations.

Schematic (b) of **Fig. 17** depicts an analog mode **1746** of operation, wherein a global laser light pulse may be applied to groups of, or all, atoms at the same time, with certain properties like detuning, Rabi frequencies and Rydberg interactions to cause multi-qubit entanglement thereby effectively driving the evolution of a Hamiltonian **1744** of the atomic array in an analog way. The combined quantum wavefunction evolves according to Schrödinger's equation, and particular, unitary operators $\hat{\mathcal{U}} = \mathrm{e}^{-\mathrm{i}\hat{\mathcal{H}}t}$, where $\hat{\mathcal{H}}$ denotes the Hamiltonian and $t$ the time, can be designed by pulse-shaping the parametrised coefficients of the Hamiltonian in time. This way, a parametric analog unitary block can be applied, which entangles the atoms and can act as a variational ansatz, or a feature map, or other entanglement operation.

The digital and analog modes can be combined or alternated, to yield a combination of the effects of each. Schematic (c) of **Fig. 17** depicts an example of such digital-analog quantum circuit, including blocks **1746$_{1-3}$** of digital qubit operations (single or multi-qubit) and analog blocks **1748$_{1-3}$.**

It can been proven that any computation can be decomposed into a finite set of digital gates, including always at least one multi-qubit digital gate (universality of digital gate sets). This includes being able to simulate general analog Hamiltonian evolutions, by using Trotterization or other simulation methods. However, the cost of Trotterization is expensive, and decomposing multi-qubit Hamiltonian evolution into digital gates is costly in terms of number of operations needed.

Digital-analog circuits define circuits which are decomposed into both explicitly-digital and explicitly-analog operations. While under the hood, both are implemented as evolutions over controlled system Hamiltonians, the digital ones form a small set of pre-compiled operations, typically but not exclusively on single-qubits, while analog ones are used to evolve the system over its natural Hamiltonian, for example in order to achieve complex entangling dynamics.

It can be shown that complex multi-qubit analog operations can be reproduced/simulated only with a relatively large number of digital gates, thus posing an advantage for devices that achieve good control of both digital and analog operations, such as neutral atom quantum computer. Entanglement can spread more quickly in terms of wall-clock runtime of a single analog block compared to a sequence of digital gates, especially when considering also the finite connectivity of purely digital devices.

Further, digital-analog quantum circuits for a neutral quantum processor that are based on Rydberg type of Hamiltonians can be differentiated analytically so that they can be used in variational and/or quantum machine learning schemes, including the differential quantum circuit (DQC) schemes as described in this application.

In order to transform the internal states of these modes, a classical control stack is used to send information to optical components and lasers. The controller may formulate the programmable unitary transformations in a parametrised way.

At the end of the unitary transformations, the states of one or more atoms may be read out by applying measurement laser pulses, and then observing the brightness using a camera to spot which atomic qubit is turned 'on' or 'off', 1 or 0. This bit information across the array is then processed further according to the embodiments.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. A computer-implemented method for computing an integral transform comprising:

   receiving information about the target function associated an object or a process. e,g. a physical object or process, the target function being associated with at least one input variable of domain $X$, the information including data associated the object or process and/or the information including a differential equation comprising one or more derivatives of the target function and associated boundary conditions, the differential equation defining a model of the object or process;
   using a functional relation between a surrogate function $G$, a kernel function $k$ and the target function to transform the data and/or the differential equation into transformed data and/or a transformed differential equation of the surrogate function $G$ respectively, the functional relation defining that the derivative of the surrogate function $G$ with respect to the at least one input variable equals a product of the kernel function $k$ and the target function;
   training a trainable model function based on the transformed data and/or the transformed differential equation and a loss function so that the trained neural network represents the surrogate function; and,
   computing the integral transform of the target function, the computing including providing an integral limit and a second integral limit of the input variable to the input of the neural network to obtain at the output of the neural network a first function value and a second function value of the surrogate function respectively and, determining the integral transform based on the first function value and the second function value.

2. Method according to claim 1 wherein the integral transform is computed after training the neural network based on an optimization scheme.

3. Method according to claims 1 or 2 wherein the kernel is selected so that the integral transform represents a physical quantity or a statistical quantity associated with the target function.

4. Method according to any of claims 1-3 wherein the differential equation is a partial differential equation (PDE) associated with a stochastic process and a stochastic input variable, wherein the trail function is a probability density function associated with the stochastic input variable and wherein, optionally, the kernel function is defined as the $m$-th power of $x$ ($m = 0,1,2, ...$) such that the integral transform represents the $m$-th order moment $I_m$.

5. Method according to claim 1 wherein the differential equation is an integro-differential equation comprising one or more integrals of the target function and one or more derivates of the target function.

6. Method according to claim 5 wherein the computing of the integral transform is performed during the training; and wherein the method further comprises:
determining a solution of the integro-differential equation based on the trained neural network and based on the relation between the derivative of the surrogate function and the product of the kernel and the target function.

7. Method according to any of claims 1-6 wherein the neural network is a deep neural network and wherein, and wherein preferably the training includes determining one or more derivatives of the surrogate function with respect to the input and/or with respect to the network parameters

8. Method according to any of claims 1-6 wherein the neural network is a quantum neural network and wherein preferably the training includes determining one or more derivatives of the surrogate function with respect to the input and/or with respect to the network parameters

9. Method according to claims 7 and 8, wherein differentiation of the neural network or the quantum neural network is based on finite differencing, or automatic differentiation by backpropagation, or forward-mode differentiation, or Taylor mode differentiation, or wherein differentiation of the quantum neural network is based on quantum circuit differentiation.

10. Method according to any of claims 7-9 wherein the quantum neural network comprising a differentiable quantum feature map and a variational quantum circuit.

11. Method according to claim 8 wherein the quantum neural network comprises a differentiable quantum kernel function.

12. The method according to claims 8-11 wherein the quantum neural network is implemented based on gate-based quantum devices, digital/analog quantum devices, neutral-atom-based quantum devices, ion-based quantum devices, optical quantum devices, superconducting quantum devices, silicon based quantum devise and/or gaussian boson sampling devices.

13. The method according to any of claims 8-12 wherein the training includes: executing one or more quantum circuits, into a sequence of signals and using the sequence of signals to execute gate operations on the quantum devices forming the quantum neural network; and/or, wherein the training includes: applying a read-out signal to quantum devices forming the quantum neural network and in response to the read-out signal measuring the output of the quantum neural network.

14. A system for computing an integral transform, using a computer system wherein the computer system is configured to perform the steps of:

receiving information about the target function associated an object or a process. e,g. a physical object or process, the target function being associated with at least one input variable of domain $X$, the information including data associated the object or process and/or the information including a differential equation comprising one or more derivatives of the target function and associated boundary conditions, the differential equation defining a model of the object or process;
using a functional relation between a surrogate function $G$, a kernel function $k$ and the target function to transform the data and/or the differential equation into transformed data and/or a transformed differential equation of the surrogate function $G$ respectively, the functional relation defining that the derivative of the surrogate function $G$ with respect to the at least one input variable equals a product of the kernel function $k$ and the target function; training a trainable model function based on the transformed data and/or the transformed differential equation and a loss function so that the trained neural network represents the surrogate function; and, computing the integral transform of the target function, the computing including providing an integral limit and a second integral limit of the input variable to the input of the neural network to obtain at the output of the neural network a first function value and a second function value of the surrogate function respectively and, determining the integral transform based on the first function value and the second function value.

15. A system according to claim 14 wherein the computer system is configured to perform any of the steps of claims 2-11.

16. A computer program or suite of computer programs comprising at least one software code portion or a computer program product storing at least one software code portion, the software code portion, when run on computer system being configured for executing the method steps according any of claims 1-12.

**Fig. 1**

104

116 — neural network NN for learning surrogate function $G_\theta(x, t)$

118 — training module for training NN based on samples and a loss function

120 — transformation module for transforming DE into a transformed DE in terms of a surrogate function $G_\theta(x, t)$, wherein the derivative of surrogate function $G$ is a product of the kernel function $k$ and the target function $f$

122 — integration module for computing integral transform based on the neural network
$$I(t) = G_\theta(x_2, t) - G_\theta(x_1, t)$$

computed integral transform 118

computed solution of DE 120

122 — module for analyzing or controlling object or process

samples 114

108 — sensor / measurements $f_i: (x_i, t_i)$

110 — differential equation DE and boundary condition BC describing behavior of object or process in terms of a target function $f(x, t)$

112 — desired characteristic of object or process in terms of an integral transform of $f$
$$I(t) = \int_{x_1}^{x_2} k(x) f(x, t) \, dx$$

102 — object / process $f(x, t)$

Fig. 2

322 — variationally update weights $\theta$ of neural network until optimum is $\theta_{opt}$ is reached

313 — **quantum neural network**

$312_2$

quantum feature maps

315

quantum variational circuits

317

$314_2$ — quantum circuit differentiation

$314_1$

$312_1$ — **deep neural network**

automatic differentiation

302

320 — compute loss function

$t$

304 — Value (of $(B(t))$ or its derivatives at some points, i.e. $B_i$: $t_i$

316 — $G_\theta(t, t')$

318 — $\dfrac{\partial G_\theta(t, t')}{\partial t}$ $\dfrac{\partial^2 G_\theta(t, t')}{\partial t \partial t'}$

Integro-differential equation and boundary condition

$$\frac{\partial}{\partial t} B(t) = m(t) + \int_0^t k(t, t') B(t') \, dt'$$

306

transform using rules of integration and relation between $G$ and $B$

$$\frac{\partial G_\theta(t, t')}{\partial t'} = k(t, t') B(t')$$

308

310 — PDE in terms of $G$ and $k$, with no reference to $B$, its derivatives or integrals

324 — Calculate $(B(t))$ from the relation:

$$\frac{\partial G_\theta(t, t')}{\partial t'} = k(t, t') B(t')$$

**Fig. 3**

receiving information about the target function associated an object or a process. e,g. a physical object or process, the target function being associated with at least one input variable of domain $X$, the information including data associated with the object or process and/or a differential equation comprising one or more derivatives of the target function and associated boundary conditions, the differential equation defining a model of the object or process;
402

using a functional relation between a surrogate function $G$, a kernel function $k$ and the target function to transform the data and/or the differential equation and the associated boundary conditions into transformed data and a transformed differential equation of the surrogate function $G$, the functional relation defining that the derivative of the surrogate function $G$ with respect to input variable equals a product of the kernel function $k$ and the target function;
404

training a model, for example a neural network, based on the transformed differential equation and/or the transformed data and based on a loss function so that the trained model represents the surrogate function; and,

406

computing the integral transform of the target function, the computing including providing a first limit of integration and a second limit of integration to the input of the neural network to obtain at the output of the neural network a first function value and a second function value of the surrogate function respectively and, determining the integral transform based on the first function value and the second function value.
408

## FIG. 4

Fig. 5B

Fig. 5A

Comparison of NN vs Analytical

**Fig. 6B**

**Fig. 6A**

Fig. 8A

802

604

806

$|0>$  $\mathcal{R}_X(2\arccos(x))$

$|0>$  $\mathcal{R}_X(4\arccos(x))$

$|0>$  $\mathcal{R}_X(6\arccos(x))$

$|0>$  $\mathcal{R}_X(8\arccos(x))$

$|0>$  $\mathcal{R}_X(10\arccos(x))$

HEA Var. layer | HEA Var. layer | HEA Var. layer | HEA Var. layer | HEA Var. layer

Comparison of NN vs Analytical

QNN Integral
Analytical

Fig. 7

35

**Fig. 8C**

**Fig. 8B**

Fig. 8D

Classical computer (CPU)
905

control and interface
904

deep neural network
903

902

901

906

907

**Fig. 9**

1001

Classical computer
1005

control and interface
1004

quantum neural network
1003

1002

1006

1007

**Fig. 10**

for $x_j$ in {X}:

quantum feature
map circuit

1101

variational quantum
circuit

1102

measure $f(x_j)$
$= \sum_\ell \alpha_\ell \langle \hat{C}_\ell(x_j) \rangle$

1103

1104

**Fig. 11A**

EP 4 300 370 A1

for $x_j$ in {X}:

1106

derivative quantum circuits

measure
$df/dx|_{x=x_j}$

**Fig. 11B**

1105

1107

**Fig. 12A**

**Fig. 12B**

**Fig. 12C**

Fig. 13

1406 $|0\rangle$ — 1412 — $H$ — 1416 ● — 1418 — $H$ — 720

1408 — 1411

1402 $|0\rangle$ ⋯ $\mathcal{U}(x)$ — SWAP — ⋯

1410

1404 $|0\rangle$ ⋯ $\mathcal{U}(y)$

**Fig. 14A**

1428 1424 $|0\rangle$ — $H$ — 1432 ● — 1434 — $S^b$ — 1436 — $H$ — 1438

1430

1422 $|0\rangle$ ⋯ $\mathcal{U}^\dagger(x)\,\mathcal{U}(y)$ ⋯

**Fig. 14B**

$|0\rangle$ ⋯ 1442 $\mathcal{U}^\dagger(x)\,\mathcal{U}(y)$ ⋯ — 1444

**Fig. 14C**

EP 4 300 370 A1

**Fig. 14D**

$|0\rangle$ — $H$ — ● — $H$ — 📡

1446 — $\dfrac{\mathrm{d}^m}{\mathrm{d}x^m}\mathcal{U}_k(x)$

$|0\rangle$ ⋯

1448 — $\dfrac{\mathrm{d}^n}{\mathrm{d}y^n}\mathcal{U}_j(y)$

$|0\rangle$ ⋯ SWAP ⋯

**Fig. 14E**

$|0\rangle$ — $H$ — ● — $S^b$ — $H$ — 📡

1450 — $\dfrac{\mathrm{d}^m}{\mathrm{d}x^m}\mathcal{U}_k^\dagger(x)\ \dfrac{\mathrm{d}^n}{\mathrm{d}y^n}\mathcal{U}_j(y)$

$|0\rangle$ ⋯ ⋯

**Fig. 14F**

$|0\rangle$ ⋯ 1452 — $\dfrac{\mathrm{d}^m}{\mathrm{d}x^m}\mathcal{U}_k^\dagger(x)\ \dfrac{\mathrm{d}^n}{\mathrm{d}y^n}\mathcal{U}_j(y)$ ⋯

43

Fig. 15

**Fig. 16A**

**Fig. 16C**

**Fig. 16B**

(a) Digital processing

(b) Analog processing

$$\mathcal{H}(t) = \frac{\hbar}{2}\Omega(t)\sum_j \sigma_j^x - \hbar\,\delta(t)\sum_j n_j + \sum_{i \neq j}\frac{C_6}{r_{ij}^6}n_i n_j$$

(c) Analog – digital processing

Fig. 17

Europäisches
Patentamt

European
Patent Office

Office européen
des brevets

# EUROPEAN SEARCH REPORT

**Application Number**

EP 22 18 1404

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUAN LEI ET AL: "A-PINN: Auxiliary physics informed neural networks for forward and inverse problems of nonlinear integro-differential equations", JOURNAL OF COMPUTATIONAL PHYSICS, LONDON, GB, vol. 462, 29 April 2022 (2022-04-29), XP087062396, ISSN: 0021-9991, DOI: 10.1016/J.JCP.2022.111260 [retrieved on 2022-04-29] * abstract * * Chapters 1-5; page 2 – page 19; figures 1-13; tables 1-3 * | 1-16 | INV. G06N3/08 G06N3/04 G06N10/60 |
| X | TEO DEVENEY ET AL: "A deep surrogate approach to efficient Bayesian inversion in PDE and integral equation models", ARXIV.ORG, CORNELL UNIVERSITY LIBRARY, 201 OLIN LIBRARY CORNELL UNIVERSITY ITHACA, NY 14853, 3 October 2019 (2019-10-03), XP081588526, * abstract * * Chapters 1-2; page 2 – page 10 * | 1-16 | |
| A | NIKLAS HEIM ET AL: "Quantum Model-Discovery", ARXIV.ORG, CORNELL UNIVERSITY LIBRARY, 201 OLIN LIBRARY CORNELL UNIVERSITY ITHACA, NY 14853, 11 November 2021 (2021-11-11), XP091096181, * abstract * * Chapters 1-4; page 1 – page 16; figures 1-6; tables 1-4 * | 8-13 | **TECHNICAL FIELDS SEARCHED (IPC)** G06N |

The present search report has been drawn up for all claims

| Place of search | Date of completion of the search | Examiner |
|---|---|---|
| The Hague | 8 December 2022 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P04C01)

**REFERENCES CITED IN THE DESCRIPTION**

**Patent documents cited in the description**

- WO 2022101483 A

**Non-patent literature cited in the description**

- **RAISSI et al.** *Physics Informed Deep Learning (Part I): data driven solutions of non-linear partial differential equations,* 30 November 2017, https://arxiv.org/abs/1711.10561

- **ANNIE E. PAINE ; VINCENT E. ELFVING ; OLEKSANDR KYRIIENKO.** Quantum Kernel Methods for Solving Differential Equations. *arXiv preprint, 2203.08884,* 2022, https://arxiv.org/abs/2203.08884